# EUROPÄISCHE PATENTSCHRIFT

(11) **EP 4 565 408 B1**
(45) Veröffentlichungstag und Bekanntmachung des Hinweises auf die Patenterteilung: **30.09.2026**
(21) Anmeldenummer: 23754731.0
(22) Anmeldetag: 04.08.2023
(51) Int. Cl.: B29C 65/18, B29C 65/30, B29C 65/78, B65B 51/26, B65B 9/067

(54) **VERPACKUNGSFORMVORRICHTUNG SOWIE VERPACKUNGSMASCHINE**
PACKAGING SHAPING DEVICE AND PACKAGING MACHINE
DISPOSITIF DE FAÇONNAGE D'EMBALLAGE ET MACHINE D'EMBALLAGE

(30) Priorität: 05.08.2022 DE 102022119784
(43) Veröffentlichungstag der Anmeldung: 11.06.2025
(73) Patentinhaber: Syntegon Packaging Systems AG, 8222 Beringen (CH)
(72) Erfinder: PETER, Thomas, 8302 Kloten (CH); LANGOHR, Christoph, 8212 Neuhausen am Rheinfall (CH)
(74) Vertreter: Novagraaf Group
(86) Internationale Anmeldenummer: PCT/EP2023/071708
(87) Internationale Veröffentlichungsnummer: WO 2024/028490

(56) Entgegenhaltungen:
- EP-A1- 2 853 378
- DE-A1- 102017 218 807

## Beschreibung

### Stand der Technik

Aus dem Stand der Technik ist bereits eine Verpackungsformvorrichtung für eine Schlauchbeutelmaschine mit zumindest einer Formeinheit zur Formung von Verpackungsmaterial, mit zumindest einer Längssiegeleinheit umfassend zumindest drei hintereinander angeordnete Paare von Siegelrollen zur Herstellung einer Längssiegelnaht und mit zumindest einer Quersiegeleinheit zur Herstellung einer Quersiegelnaht bekannt. Zur Verbesserung eines Form- und/oder Verschließprozesses zur Formung und/oder Verschließung des Verpackungsmaterials ist bereits vorgeschlagen worden, das Verpackungsmaterial vor der Formung in der Formeinheit zu erwärmen. Nachteilig ist hierbei, dass das mittels der Formeinheit geformte Verpackungsmaterial, und zwar das zu einem Verpackungsmaterialschlauch geformte Verpackungsmaterial in einem Bereich, und zwar einem Transportbereich zwischen der Formeinheit und der Quersiegeleinheit wieder ab-und/oder auskühlt, was zu einer Verringerung und/oder Verschlechterung einer Prozessstabilität sowie Prozesseffizienz führt. Um jenem Nachteil zu begegnen, ist im Stand der Technik ebenfalls bereits vorgeschlagen worden, ein Heizelement in einem Bereich vor der Quersiegeleinheit, und zwar zwischen einem zweiten Paar von Siegelrollen und einem dritten Paar von Siegelrollen anzuordnen.

Verpackungsformvorrichtungen sind beispielsweise bereits aus DE 10 2012 223 072 A1, JP 2016-41 592 A, EP 0 241 051 A1 und DE 28 00658 A1 bekannt.

Des Weiteren ist aus DE 10 2017 218 807 A1 bereits eine Verpackungsformvorrichtung für eine Schlauchbeutelmaschine bekannt, wobei die Verpackungsformvorrichtung eine zur Längssiegelung eines Verpackungsmaterialschlauchs vorgesehene Längssiegeleinheit, die eine Reihe von Siegeleinheiten mit einer ersten Siegeleinheit der Reihe von Siegeleinheiten und zumindest einer nachfolgenden zweiten Siegeleinheit der Reihe von Siegeleinheiten aufweist, und eine Heizeinheit umfasst, welche zu einer zumindest abschnittsweisen Beheizung des Verpackungsmaterialschlauchs vorgesehen ist, wobei die Heizeinheit zumindest ein Heizelement aufweist, welches zumindest teilweise zwischen der ersten Siegeleinheit und der zweiten Siegeleinheit angeordnet ist.

Ferner ist aus EP 2 853 378 A1 bereits eine Verpackungsmaschine, insbesondere eine Schlauchbeutelmaschine, mit einer Verpackungsformvorrichtung bekannt, wobei die Verpackungsformvorrichtung eine zur Längssiegelung eines Verpackungsmaterialschlauchs vorgesehene Längssiegeleinheit, die eine als Siegelrollenpaar ausgebildete Siegeleinheit aufweist, und eine Heizeinheit, welche zu einer zumindest abschnittsweisen Beheizung, insbesondere zur Vorheizung, des Verpackungsmaterialschlauchs vorgesehen ist, wobei die Heizeinheit entlang einer Förderrichtung vor der Siegeleinheit angeordnet ist, umfasst.

Die Aufgabe der Erfindung besteht insbesondere darin, eine gattungsgemäße Vorrichtung mit verbesserten Eigenschaften hinsichtlich einer Effizienz bereitzustellen. Die Aufgabe wird erfindungsgemäß durch die Merkmale der Ansprüche 1 und 12 gelöst, während vorteilhafte Ausgestaltungen und Weiterbildungen der Erfindung den Unteransprüchen entnommen werden können.

### Offenbarung der Erfindung

Die Erfindung geht aus von einer Verpackungsformvorrichtung, insbesondere für eine Schlauchbeutelmaschine, mit einer zur Längssiegelung eines Verpackungsmaterialschlauchs vorgesehenen Längssiegeleinheit, aufweisend eine Reihe von Siegeleinheiten mit einer ersten Siegeleinheit der Reihe von Siegeleinheiten und zumindest einer nachfolgenden zweiten Siegeleinheit der Reihe von Siegeleinheiten, und mit einer Heizeinheit, welche zu einer zumindest abschnittsweisen Beheizung des Verpackungsmaterialschlauchs vorgesehen ist, wobei die Heizeinheit zumindest ein Heizelement aufweist, welches zumindest teilweise zwischen der ersten Siegeleinheit und der zweiten Siegeleinheit angeordnet ist.

Es wird vorgeschlagen, dass die Verpackungsformvorrichtung eine zumindest abschnittsweise zwischen der ersten Siegeleinheit und der zweiten Siegeleinheit angeordnete Luftabsaugungseinheit zur Absaugung von Luft aus zumindest einem Bereich des Verpackungsmaterialschlauchs umfasst.

Durch eine derartige Ausgestaltung kann eine Effizienz, hinsichtlich einer Beheizung zumindest eines Verpackungsmaterialschlauchs, gesteigert werden. Zudem kann die Effizienz hinsichtlich einer Formung und/oder Verschließung und/oder Versiegelung und/oder Handhabung des Verpackungsmaterialschlauchs gesteigert werden. Außerdem kann mittels eines Heizelements eine Wärme-/Hitzeübertragung auf den Verpackungsmaterialschlauch optimiert sowie eine Abkühlung und/oder Auskühlung des Verpackungsmaterialschlauchs zumindest abschnittsweise, vorteilhaft in einem Bereich zwischen einer Formeinheit und einer Quersiegeleinheit, reduziert und bevorzugt verhindert werden. Damit kann das Abkühlen und/oder Auskühlen gerade nach einer Formung und/oder Verformung von Verpackungsmaterial zu dem Verpackungsmaterialschlauch zumindest abschnittsweise reduziert und bevorzugt verhindert werden. Des Weiteren kann vorteilhaft ein Verschließen, beispielsweise eine Versiegelung, vorzugsweise eine Quersiegelung, des Verpackungsmaterialschlauchs effizienter gestaltet werden. Ferner kann eine Leistung und/oder eine Geschwindigkeit eines gesamten Verpackungsformprozesses verbessert, und zwar gerade eine Geschwindigkeit bei Formung und/oder Förderung und/oder Verschließung, beispielsweise Versiegelung, erhöht werden. Außerdem kann eine hohe Prozessstabilität bereitgestellt werden. Des Weiteren kann eine Kosten- und/oder eine Produkt- und/oder Betriebs- und/oder eine Arbeitseffizienz gesteigert werden.

Die Verpackungsformvorrichtung ist, ohne darauf beschränkt zu sein, zumindest dazu vorgesehen, Verpackungsmaterial zu formen, und zwar bevorzugt zu dem Verpackungsmaterialschlauch. Insbesondere liegt der Verpackungsmaterialschlauch nach einer Formung und/oder Verformung von Verpackungsmaterial vor. Ferner kann die Verpackungsformvorrichtung zumindest zu einem Abpacken und/oder einer Befüllung und/oder einer Verpackung von Füllgütern vorgesehen sein. Innerhalb des Verpackungsmaterialschlauchs, und zwar in einem Füllgutaufnahmebereich des Verpackungsmaterialschlauchs kann zumindest ein Füllgut oder eine Vielzahl von Füllgütern angeordnet und/oder anordenbar sein. Vorteilhaft weist die Verpackungsformvorrichtung einen Verpackungsaufnahmebereich auf, in welchem der Verpackungsmaterialschlauch und zumindest das Füllgut oder die Füllgüter aufnehmbar und/oder angeordnet sind. Insbesondere ist der Füllgutaufnahmebereich Teil des Verpackungsaufnahmebereichs. Vorzugsweise ist der Verpackungsmaterialschlauch in dem Verpackungsaufnahmebereich angeordnet und/oder anordenbar. Bevorzugt begrenzt der Verpackungsmaterialschlauch in dem Verpackungsaufnahmebereich zumindest teilweise den Füllgutaufnahmebereich und/oder definiert diesen. Mittels des Verpackungsmaterials kann das Füllgut zumindest teilweise und vorteilhaft vollständig verpackt werden. Der Verpackungsmaterialschlauch ist insbesondere zu einer Verpackung, und zwar zu einer zumindest teilweisen Umhüllung von zumindest dem Füllgut vorgesehen.

Insbesondere ist die Verpackungsformvorrichtung Teil, und zwar eine Unterbaugruppe einer Verpackungsmaschine. Denkbar wäre auch, dass die Verpackungsformvorrichtung die Verpackungsmaschine ausbildet. Die Verpackungsmaschine kann, ohne darauf beschränkt zu sein, zumindest zu einer Verpackung und/oder Umverpackung von Füllgütern vorgesehen sein. Ferner kann die Verpackungsmaschine zumindest zu einer Abfüllung, Dosierung, Verschließung, Transportierung, Sortierung und/oder Förderung von Füllgütern und/oder von dem Verpackungsmaterial und/oder dem Verpackungsmaterialschlauch vorgesehen sein. Die Verpackungsmaschine kann eine Vielzahl an weiteren Vorrichtungen und/oder Einheiten und/oder Systemen zur Be- und/oder Verarbeitung und/oder Dosierung und/oder Lagerung und/oder Verpackung und/oder Transportierung und/oder Handhabung und/oder Sortierung und/oder Förderung von Füllgütern, welche der Fachmann für sinnvoll erachtet, aufweisen, wie beispielsweise zumindest eine Schneidvorrichtung, zumindest eine Dosiervorrichtung, zumindest eine Abfüllvorrichtung, zumindest eine Lagervorrichtung, zumindest eine Sterilisationsvorrichtung, zumindest eine Verschlussvorrichtung, zumindest eine Produkthandhabungsvorrichtung zur Handhabung, beispielsweise zur Transportierung, von Füllgütern und/oder Produkten, oder dergleichen.

Die Verpackungsmaschine könnte möglicherweise die Schlauchbeutelmaschine aufweisen. Vorzugsweise ist die Verpackungsmaschine als Schlauchbeutelmaschine ausgebildet. Die Verpackungsmaschine kann horizontal und/oder vertikal angeordnet sein. Ferner kann es sich bei der Verpackungsformvorrichtung um eine horizontale Verpackungsformvorrichtung und/oder eine vertikale Verpackungsformvorrichtung handeln. Insbesondere ist die horizontale Verpackungsformvorrichtung dazu vorgesehen, zumindest das Verpackungsmaterial und/oder den Verpackungsmaterialschlauch entlang einer horizontalen, vorteilhaft entlang einer zumindest im Wesentlichen senkrecht zu einer Gravitationskraftwirkrichtung verlaufenden, Transportrichtung zu führen. Unter "im Wesentlichen senkrecht" soll in diesem Zusammenhang unter einem Winkel zwischen 85° und 95°, vorzugsweise zwischen 88° und 92° und besonders vorteilhaft von 90° verstanden werden. Ferner kann die vertikale Verpackungsformvorrichtung dazu vorgesehen sein, zumindest das Verpackungsmaterial und/oder den Verpackungsmaterialschlauch entlang einer vertikalen, vorteilhaft entlang einer zumindest im Wesentlichen parallel zu der Gravitationskraftwirkrichtung verlaufenden, Transportrichtung zu führen. Unter "im Wesentlichen parallel" soll hier eine Ausrichtung einer Richtung relativ zu einer Bezugsrichtung, insbesondere in einer Ebene, verstanden werden, wobei die Richtung gegenüber der Bezugsrichtung eine Abweichung kleiner als 8°, vorteilhaft kleiner als 5° und besonders vorteilhaft kleiner als 2° aufweist.

Vorteilhaft ist die Verpackungsmaschine, insbesondere die Verpackungsformvorrichtung, zumindest zu einer Führung von Verpackungsmaterial und/oder dem Verpackungsmaterialschlauch vorgesehen. Das Verpackungsmaterial kann auf zumindest einer Verpackungsmaterialbahn geführt werden, welche eine ebene, flächige und/oder längliche und/oder rechteckige Konfiguration und/oder Ausgestaltung des Verpackungsmaterials aufweist. Das Verpackungsmaterial kann zumindest teilweise, vorteilhaft zumindest zu einem Großteil oder vollständig, aus einem Mineral, einem Metall, einem Kunststoff und/oder einem Verbundmaterial ausgebildet sein. Das Verpackungsmaterial könnte zumindest teilweise oder zumindest zu einem Großteil aus nachwachsenden Rohstoffen hergestellt sein. Unter "nachwachsenden Rohstoffen" sollen hierbei organische Rohstoffe, insbesondere pflanzliche Rohstoffe, welche aus land- und/oder forstwirtschaftlicher Produktion stammen und vom Menschen zielgerichtet für weiterführende Anwendungszwecke außerhalb der Nahrungs- und Futtermittelindustrie angebaut werden oder bei welchen es sich um Nebenprodukte und/oder Abfallprodukte aus der Landwirtschaft und/oder der Nahrungs- und Futtermittelindustrie handelt, verstanden werden. Nachwachsende Rohstoffe im Sinne der vorliegenden Anmeldung sind ausschließlich organische Rohstoffe, welche nicht fossilen Ursprungs sind. Vorzugsweise handelt es sich bei nachwachsenden Rohstoffen vorliegend um heimische Produkte aus land- und/oder forstwirtschaftlicher Produktion sowie deren Nebenprodukte und/oder Reststoffe, sofern diese nicht dem Abfallrecht unterliegen, sowie um Algen. Bevorzugt ist das Verpackungsmaterial zumindest teilweise, vorteilhaft zumindest zu einem Großteil, aus Papier ausgebildet und/oder hergestellt. Unter dem Ausdruck "zu einem Großteil" sollen vorliegend beispielsweise zumindest 55%, vorteilhaft zumindest 65%, vorzugsweise zumindest 75%, besonders bevorzugt zumindest 85% und besonders vorteilhaft höchstens 95% eines Flächen- und/oder Volumen- und/oder Massenanteils verstanden werden.

Die Verpackungsformvorrichtung kann zumindest eine Formeinheit aufweisen, welche dazu vorgesehen ist, das Verpackungsmaterial zu dem Verpackungsmaterialschlauch zu formen. Die Formeinheit kann zumindest eine Faltkante aufweisen, welche zur Umlenkung und/oder Verformung des Verpackungsmaterials, insbesondere der Verpackungsmaterialbahn vorgesehen ist. Bevorzugt ist die Faltkante als eine Schulterkante und die Formeinheit als eine Formschulter ausgebildet. Vorteilhaft ist die Formeinheit frei von Rollen zu einer Umlenkung des Verpackungsmaterials.

Die Verpackungsmaschine kann zumindest eine Verpackungsmaterialabwickeleinheit aufweisen, welche dazu vorgesehen ist, das Verpackungsmaterial, insbesondere in Form einer Verpackungsmaterialrolle, aufzunehmen und/oder das Verpackungsmaterial zur Weiterführung als Verpackungsmaterialbahn abzuwickeln und insbesondere einer Verpackungsmaterialzuführeinheit der Verpackungsmaschine zuzuführen. Insbesondere führt die Verpackungsmaterialzuführeinheit der Formeinheit das Verpackungsmaterial, bevorzugt die Verpackungsmaterialbahn, zu. Vorzugsweise ist die Verpackungsmaterialzuführeinheit einer Transportrichtung des Verpackungsmaterialschlauchs betrachtet vor der Formeinheit angeordnet. Die Verpackungsmaterialzuführeinheit kann eine Mehrzahl von, insbesondere dem Fachmann bekannten, Komponenten, wie beispielsweise zumindest einen Schwinghebel, zumindest einen Zentriertaster, zumindest eine Bahnkantensteuerung und/oder zumindest eine Druckeinheit zu einem Bedrucken des Verpackungsmaterials oder dergleichen, aufweisen.

Bevorzugt ist die Längssiegeleinheit dazu vorgesehen, eine zumindest im Wesentlichen parallel zu der Transportrichtung des Verpackungsmaterialschlauchs verlaufende Längssiegelnaht des Verpackungsmaterialschlauchs zu erstellen und/oder zu erzeugen, insbesondere durch einen Wärmeeintrag und/oder durch einen Druck auf zumindest einen Abschnitt des Verpackungsmaterialschlauchs. Die Längssiegeleinheit kann entlang der Transportrichtung des Verpackungsmaterialschlauchs betrachtet hinter der Formeinheit angeordnet sein. Insbesondere sind die Siegeleinheiten, und zwar die erste Siegeleinheit und zumindest die zweite Siegeleinheit der Reihe von Siegeleinheiten in Transportrichtung des Verpackungsmaterialschlauchs betrachtet hintereinander angeordnet. Die Siegeleinheiten, insbesondere die erste Siegeleinheit und/oder zumindest die zweite Siegeleinheit, können jeweils zumindest ein Paar von, insbesondere mit einem Profil versehenen, mit Druck beaufschlagbaren und/oder beheizbaren, Siegelrollen aufweisen. Die erste Siegeleinheit kann ein erstes Paar von Siegelrollen aufweisen oder derart ausgebildet sein. Die zweite Siegeleinheit kann ein zweites Paar von Siegelrollen aufweisen oder derart ausgebildet sein. Die erste Siegeleinheit und/oder die zweite Siegeleinheit kann/können zu einer zumindest abschnittsweisen Siegelung des Verpackungsmaterialschlauchs und/oder zu einem Transport und/oder Vorschub des Verpackungsmaterialschlauchs entlang der Transportrichtung vorgesehen sein. Denkbar wäre, dass die erste Siegeleinheit lediglich zum Vorschub und/oder zur Transportierung und/oder Führung des Verpackungsmaterialschlauchs entlang der Transportrichtung des Verpackungsmaterialschlauchs, insbesondere ausgehend von der Formeinheit, vorgesehen und bevorzugt frei von einer Siegelfunktion zur Erzeugung der Längssiegelnaht für den Verpackungsmaterialschlauch ist. Alternativ und/oder zusätzlich wäre denkbar, dass zumindest die zweite Siegeleinheit lediglich zum Vorschub und/oder zur Transportierung und/oder Führung des Verpackungsmaterialschlauchs entlang der Transportrichtung des Verpackungsmaterialschlauchs, insbesondere ausgehend von der Formeinheit betrachtet, vorgesehen und bevorzugt frei von einer Siegelfunktion zur Erzeugung der Längssiegelnaht für den Verpackungsmaterialschlauch ist. Vorzugsweise ist zumindest die zweite Siegeleinheit zur zumindest teilweisen und zumindest abschnittsweisen Siegelung des Verpackungsmaterialschlauchs und damit zur Erzeugung der Längssiegelnaht vorgesehen.

Die erste Siegeleinheit und/oder die zweite Siegeleinheit kann/können jeweils durch Rotation der Paare von Siegelrollen den Verpackungsmaterialschlauch zumindest abschnittsweise transportieren, und zwar in Transportrichtung des Verpackungsmaterialschlauchs. Ist/sind das/die Paar/Paare von Siegelrollen der ersten Siegeleinheit und/oder der zweiten Siegeleinheit beheizbar, kann jenes Paar von Siegelrollen zusätzlich Teil der Heizeinheit sein. Das/die Paar/Paare von beheizbaren Siegelrollen der ersten Siegeleinheit und/oder der zweiten Siegeleinheit können zur zumindest abschnittsweisen Beheizung und/oder zum Warmhalten des Verpackungsmaterialschlauchs und/oder zur Erzeugung der Längssiegelnaht des Verpackungsmaterialschlauchs vorgesehen sein. Bevorzugt ist zumindest ein Paar von Siegelrollen der ersten Siegeleinheit und/oder der zweiten Siegeleinheit beheizt. Denkbar wäre auch, dass das/die Paar/Paare von Siegelrollen der ersten Siegeleinheit und/oder der zweiten Siegeleinheit unbeheizt sind. Vorzugsweise ist die erste Siegeleinheit, insbesondere das erste Paar von Siegelrollen, unbeheizt. Besonders bevorzugt ist die zweite Siegeleinheit, insbesondere das zweite Paar von Siegelrollen, beheizt.

Ferner kann die Verpackungsmaschine, insbesondere die Verpackungsformvorrichtung, zumindest eine Quersiegeleinheit aufweisen, welche dazu vorgesehen ist, nach jeweils einem Füllgut, welches in dem Füllgutaufnahmebereich angeordnet ist, Quersiegelnähte des Verpackungsmaterialschlauchs, welche insbesondere zumindest im Wesentlichen senkrecht zu der Transportrichtung des Verpackungsmaterialschlauchs verlaufen, zu erstellen und/oder zu erzeugen, und zwar bevorzugt durch gezielten Druck und/oder durch einen gezielten Wärmeeintrag auf den Verpackungsmaterialschlauch. Insbesondere ist die Quersiegeleinheit dazu vorgesehen, den Verpackungsmaterialschlauch in einzelne Verpackungen, wobei jeweils eine Verpackung der Verpackungen zumindest eines der Füllgüter umschließt, zu vereinzeln und/oder abzutrennen. Die Quersiegeleinheit kann entlang der Transportrichtung des Verpackungsmaterialschlauchs betrachtet nach der Formeinheit, und zwar bevorzugt nach der Längssiegeleinheit angeordnet sein.

Mittels der Längssiegeleinheit, und zwar der Reihe von Siegeleinheiten, welche in Transportrichtung des Verpackungsmaterialschlauchs betrachtet hintereinander angeordnet sind, kann der Verpackungsmaterialschlauch von der Formeinheit zu der Quersiegeleinheit transportierbar sein. Insbesondere ist die erste Siegeleinheit ausgehend von der Formeinheit und in Transportrichtung des Verpackungsmaterialschlauchs betrachtet, zwischen der Formeinheit und der zweiten Siegeleinheit angeordnet. Ferner kann die zweite Siegeleinheit ausgehend von der Formeinheit und in Transportrichtung des Verpackungsmaterialschlauchs betrachtet, zwischen der ersten Siegeleinheit und der Quersiegeleinheit oder möglicherweise einer weiteren, und zwar dritten Siegeleinheit der Reihe von Siegeleinheiten angeordnet sein.

Der Verpackungsaufnahmebereich kann sich entlang der Transportrichtung des Verpackungsmaterialschlauchs betrachtet, zumindest abschnittsweise zwischen der Formeinheit und der Quersiegeleinheit erstrecken. Insbesondere ist der Verpackungsaufnahmebereich relativ zu der Längssiegeleinheit ausgerichtet und/oder angeordnet. Bevorzugt erstreckt sich der Füllgutaufnahmebereich entlang der Transportrichtung des Verpackungsmaterialschlauchs betrachtet, zumindest abschnittsweise zwischen der Formeinheit und der Quersiegeleinheit. Insbesondere erstreckt sich der Füllgutaufnahmebereich relativ zu der Längssiegeleinheit. Der Verpackungsaufnahmebereich und/oder der Füllgutaufnahmebereich kann/können sich parallel zu einer Haupterstreckungsebene der Längssiegeleinheit erstrecken und/oder angeordnet sein. Vorteilhaft verläuft die Transportrichtung des Verpackungsmaterialschlauchs parallel zu der Haupterstreckungsebene der Längssiegeleinheit. Unter einer "Haupterstreckungsebene" eines Objekts soll vorliegend eine Ebene verstanden werden, welche parallel zu einer größten Seitenfläche eines kleinsten gedachten Quaders ausgerichtet ist, welcher das Objekt gerade noch vollständig umschließt, und insbesondere durch den Mittelpunkt des Quaders verläuft.

Vorteilhaft weist die Verpackungsmaschine zumindest eine Füllgutzuführeinheit auf, welche dazu vorgesehen ist, die zu verpackenden Füllgüter zur Verpackung und/oder Umhüllung mittels des Verpackungsmaterialschlauchs in einen Bereich der Verpackungsformvorrichtung, insbesondere zumindest der Formeinheit, zu transportieren und/oder zu fördern. Die Füllgutzuführeinheit kann beispielsweise ein Förderband und/oder eine Mitnehmerkette oder dergleichen aufweisen oder derart ausgebildet sein. Vorzugsweise verläuft eine Transportrichtung der Füllgüter zumindest im Wesentlichen parallel zu der Transportrichtung des Verpackungsmaterialschlauchs. Insbesondere verlaufen die Transportrichtung der Füllgüter und die Transportrichtung des Verpackungsmaterialschlauchs in einer gemeinsamen Ebene, vorteilhaft in einer Horizontalebene oder einer Vertikalebene. Vorzugsweise ist die Füllgutzuführeinheit entlang der Transportrichtung des Verpackungsmaterialschlauchs betrachtet vor der Formeinheit angeordnet. Bei dem Füllgut kann es sich beispielsweise um ein festes, flüssiges, pastöses und/oder stückiges Füllgut handeln. Ferner kann das Füllgut beispielsweise ein Lebensmittel, ein pharmazeutisches Produkt, ein Bedarfsgut, ein Beauty- und/oder Körperpflegeprodukt sein, wie beispielsweise Schokoriegel, Chips, Soßen, Brotaufstriche, Pasten, Fertiggerichte, Süßwaren, Cremes, und/oder Shampoos oder dergleichen sein. Denkbar wäre auch, dass das Füllgut ein Bedarfsgut und/oder Gegenstand aus dem Bereich Spielwaren, Handwerken, Küche und/oder Haushalt oder dergleichen ist, wie beispielsweise ein Spielzeugauto, eine Schöpfkelle, ein Topf, ein Elektrokleingerät, beispielsweise ein Mixer und/oder eine Küchenwaage, und/oder eine Schraube. Bei dem Füllgut kann es sich um ein jegliches denkbares und dem Fachmann als sinnvoll erscheinendes Füllgut handeln.

Vorzugsweise ist in Transportrichtung des Verpackungsmaterialschlauchs betrachtet zwischen der Formeinheit und der Quersiegeleinheit ein Auflageelement, insbesondere eine Arbeitsplatte, der Verpackungsformvorrichtung angeordnet, bezüglich welchem der Verpackungsmaterialschlauch transportierbar ist. Das Auflageelement bildet vorzugsweise eine Stückbahn aus. Das Auflageelement kann sich zumindest im Wesentlichen parallel zu der Transportrichtung des Verpackungsmaterialschlauchs erstrecken. Vorzugsweise sind/ist die Füllgutzuführeinheit, die Längssiegeleinheit, insbesondere die Reihe von Siegelrollen, und/oder die Quersiegeleinheit zumindest teilweise und/oder zumindest abschnittsweise innerhalb und/oder unterhalb und/oder oberhalb des Auflageelements angeordnet und/oder erstrecken/erstreckt sich zumindest abschnittsweise und/oder zumindest teilweise durch das Auflageelement hindurch. Besonders bevorzugt verlaufen Rotationsachsen des/der Paares/Paare von Siegelrollen der ersten Siegeleinheit und/oder der zweiten Siegeleinheit zumindest im Wesentlichen senkrecht zu einer Haupterstreckungsebene des Auflageelements. Vorzugsweise ist die Formeinheit auf einer ersten Seite des Auflageelements angeordnet, und zwar insbesondere auf welcher die Füllgutzuführeinheit angeordnet ist. Insbesondere ist die Quersiegeleinheit auf einer der ersten Seite gegenüberliegenden zweiten Seite des Auflageelements angeordnet. In Gravitationskraftwirkrichtung betrachtet kann die Längssiegeleinheit zumindest teilweise unterhalb einer Oberseite des Auflageelements angeordnet sein. Alternativ und/oder zusätzlich könnte das Auflageelement auf der Oberseite zumindest eine Öffnung und/oder Aussparung aufweisen, in welcher zumindest eine Siegeleinheit der reihe von Siegeleinheiten angeordnet ist. Der Verpackungsmaterialschlauch kann sich zumindest teilweise und zumindest abschnittsweise durch das Auflageelement hindurch erstrecken und/oder angeordnet sein. Der Verpackungsmaterialschlauch kann sich zumindest teilweise und zumindest abschnittsweise durch die Oberseite hindurch erstrecken. Insbesondere ist relativ zu zumindest der Oberseite des Auflageelements zumindest ein Teil des Verpackungsmaterialschlauchs transportierbar. Vorteilhaft erstreckt sich die Transportrichtung des Verpackungsmaterialschlauchs zumindest im Wesentlichen parallel zu der Oberseite des Auflageelements.

Bevorzugt ist zumindest das Heizelement der Heizeinheit in zumindest einem montierten Zustand dazu vorgesehen, den Verpackungsmaterialschlauch zumindest abschnittsweise entlang der Transportrichtung des Verpackungsmaterialschlauchs zu beheizen und/oder warm zu halten. Eine Oberseite des Heizelements könnte zumindest im Wesentlichen flächenbündig mit der Oberseite des Auflageelements und/oder mit einer Oberseite der Längssiegeleinheit angeordnet sein. Das Heizelement kann in einem direkten oder indirekten Kontakt mit dem Verpackungsmaterialschlauch angeordnet sein. Vorzugsweise ist das Heizelement dazu vorgesehen, den Verpackungsmaterialschlauch zumindest in einem Bereich/Abschnitt zwischen der ersten Siegeleinheit und der zweiten Siegeleinheit zu beheizen und/oder warm zu halten. Das Heizelement könnte ein Widerstandsheizelement oder ein induktives Heizelement sein.

Die Heizeinheit kann ferner ein thermisches Element aufweisen, welches zumindest den Füllgutaufnahmebereich und/oder den Verpackungsmaterialaufnahmebereich zumindest abschnittsweise umgreift und/oder begrenzt und dazu vorgesehen ist, den Verpackungsmaterialschlauch zumindest teilweise und abschnittsweise entlang der Transportrichtung, insbesondere in Gravitationskraftwirkrichtung betrachtet oberhalb der Oberseite des Auflageelements und/oder der Oberseite der Längssiegeleinheit, aufzunehmen und zu beheizen und/oder warm zu halten. Vorteilhaft ist das thermische Element länglich ausgebildet. Das thermische Element kann zumindest teilweise und vorteilhaft zumindest zu einem Großteil aus einem Metallblech bestehen. Insbesondere ist das thermische Element ein Bauelement, welches zumindest eine Material- und/oder Charaktereigenschaft aufweist, welche Wärme betrifft, durch Wärme verursacht ist und/oder auf Wärme beruht.

Ferner kann das thermische Element als ein Tunnel ausgebildet sein, innerhalb welchem zumindest abschnittsweise der Verpackungsmaterialschlauch anordenbar und/oder angeordnet ist. Bevorzugt ist das thermische Element, entlang der Transportrichtung des Verpackungsmaterialschlauchs betrachtet, in zumindest dem montierten Zustand nach der Formeinheit und vorteilhaft vor der Quersiegeleinheit angeordnet. Das thermische Element kann, entlang der Transportrichtung des Verpackungsmaterialschlauchs betrachtet, zumindest teilweise und vorteilhaft vollständig zwischen der Formeinheit und der Quersiegeleinheit angeordnet sein. Vorteilhaft ist das thermische Element in dem montierten Zustand relativ zu der Haupterstreckungsebene der Längssiegeleinheit angeordnet. In Gravitationskraftwirkrichtung betrachtet kann das thermische Element zumindest teilweise und vorteilhaft vollständig an und/oder oberhalb der Oberseite des Auflageelements und/oder der Oberseite der Längssiegeleinheit angeordnet sein. Das thermische Element kann aktiv, und zwar unmittelbar oder passiv, und zwar mittelbar beheizbar sein. Beispielsweise kann das Heizelement das thermische Element zumindest teilweise und/oder zumindest abschnittsweise direkt, und zwar unmittelbar beheizen. Denkbar wäre auch, dass das thermische Element dazu vorgesehen ist, Hitze in einem Heizbereich, und zwar in einem Innenbereich des thermischen Elements, welcher vorteilhaft dem Verpackungsmaterialaufnahmebereich und/oder dem Füllgutaufnahmebereich entspricht, zu stauen. Die von dem Heizelement abgegebene Hitze und/oder Wäre könnte zu and/oder an das thermische Element weitergeleitet werden. Zur Beheizung des Verpackungsmaterialschlauchs können das thermische Element und zumindest das Heizelement zusammenwirken. Beispielsweise wenn das thermische Element in Gravitationskraftwirkrichtung oberhalb der Oberseite des Auflageelements und/oder der Oberseite der Längssiegeleinheit und das Heizelement zumindest teilweise an und/oder unterhalb der Oberseite des Auflageelements und/oder der Oberseite der Längssiegeleinheit angeordnet ist, könnten das Heizelement und das thermische Element den Verpackungsmaterialschlauch von unterschiedlichen Seiten, insbesondere gegenüberliegenden Seiten, beheizen und/oder warmhalten.

Im vorliegenden Dokument soll unter "vorgesehen" hier und im Folgenden speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt. Ferner dienen im vorliegenden Dokument Zahlwörter, wie beispielsweise "erste/r/s" und "zweite/r/s", welche bestimmten Begriffen vorangestellt sind, lediglich zu einer Unterscheidung von Verfahrensschritten und/oder Objekten und/oder einer Zuordnung zwischen Objekten untereinander und implizieren keine vorhandene Gesamtanzahl und/oder Rangfolge der Objekte und/oder der Verfahrensschritte. Insbesondere impliziert ein "zweites" Objekt und/oder Verfahrensschritt nicht zwangsläufig ein Vorhandensein eines "ersten" Objekts und/oder Verfahrensschritts.

Bei dem Heizelement könnte es sich um ein Bauelement handeln, welches zu einer direkten Kontaktierung mit dem Verpackungsmaterialschlauch und vorzugsweise zusätzlich neben der Beheizung des Verpackungsmaterialschlauchs zur Transportierung und/oder Führung des Verpackungsmaterialschlauchs entlang der Transportrichtung des Verpackungsmaterialschlauchs vorgesehen ist. Das Heizelement könnte eine Führungsnut zur Führung des Verpackungsmaterialschlauchs entlang der Transportrichtung des Verpackungsmaterialschlauchs aufweisen. Denkbar wäre, dass das Heizelement als eine konventionelle Vorheizung ausgebildet ist.

Um eine Prozesseffizienz bei Siegelung von zumindest einem Verpackungsmaterialschlauch zu steigern, weist die Verpackungsformvorrichtung erfindungsgemäß eine zumindest abschnittsweise zwischen der ersten Siegeleinheit und der zweiten Siegeleinheit angeordnete Luftabsaugungseinheit zur Absaugung von Luft aus zumindest einem Bereich des Verpackungsmaterialschlauchs auf. Dadurch kann eine besonders vorteilhaft effiziente Verpackung von Füllgütern sowie Versiegelung des Verpackungsmaterialschlauchs bereitgestellt werden.

Die Luftabsaugungseinheit kann zur Absaugung von Luft aus dem Füllgutaufnahmebereich innerhalb des Verpackungsmaterialschlauchs und/oder zur Absaugung von Luft aus dem Verpackungsmaterialaufnahmebereich, insbesondere einem Umgebungsbereich des Verpackungsmaterialschlauchs und/oder einem Bereich zwischen dem Verpackungsmaterial und dem thermischen Element, vorgesehen sein. Vorzugsweise ist die Luftabsaugungseinheit dazu vorgesehen, Luft aus dem Bereich des Verpackungsmaterialschlauchs zumindest zwischen der ersten Siegeleinheit und der zweiten Siegeleinheit abzusaugen. Eine Oberseite der Luftabsaugungseinheit kann zumindest im Wesentlichen flächenbündig mit der Oberseite des Auflageelements und/oder der Oberseite der Längssiegeleinheit angeordnet sein. Die Luftabsaugungseinheit kann in dem montierten Zustand in einem direkten oder indirekten Kontakt mit dem Verpackungsmaterialschlauch angeordnet sein. Vorteilhaft weist die Luftabsaugungseinheit eine Führungsnut zur Führung des Verpackungsmaterialschlauchs entlang der Transportrichtung auf. Die Luftabsaugungseinheit kann Teil der Längssiegeleinheit sein. Alternativ könnte die Luftabsaugungseinheit mit der Längssiegeleinheit in dem montierten Zustand verbunden, und zwar beispielsweise mittels einer kraft-und/oder formschlüssigen Verbindung, wie beispielsweise einer Rastverbindung und/oder Steckverbindung und/oder Drehverbindung und/oder Schraubverbindung, und/oder einer stoffschlüssigen Verbindung, beispielsweise einer Klebeverbindung und/oder Schweißverbindung.

Die Luftabsaugungseinheit könnte zumindest zu einem Großteil gemäß einer im Stand der Technik und dem Fachmann bekannten Luftabsaugung für Siegeleinheiten, und zwar Längssiegeleinheiten ausgebildet sein. Die Luftabsaugungseinheit könnte die Luft durch Erzeugung eines Unterdrucks und/oder eines Vakuums absaugen. Vorzugsweise weist die Luftabsaugungseinheit eine Mehrzahl von Öffnungen, durch welche die Luft absaugbar ist, an zumindest einer Seite, insbesondere Oberseite, der Luftabsaugungseinheit auf. Die Öffnungen könnten in einer Reihe oder matrixförmig angeordnet sein. Bevorzugt weist die Luftabsaugungseinheit in zumindest der Führungsnut und/oder an der dem Verpackungsmaterialschlauch und/oder dem thermischen Element zugewandten Oberseite die Vielzahl von Öffnungen auf. In zumindest einem Betriebszustand können durch die Öffnungen die Luft aus dem Bereich des Verpackungsmaterialschlauchs abgesaugt und damit der Verpackungsmaterialschlauch gegen die Luftabsaugungseinheit, insbesondere zumindest die Oberseite und/oder die Führungsnut, gepresst und/oder gedrückt und/oder angesaugt und/oder angezogen werden. Alternativ und/oder zusätzlich kann bei Absaugung der Luft aus dem Füllgutaufnahmebereich innerhalb des Verpackungsmaterialschlauchs überschüssige Luft zwischen dem Füllgut und dem Verpackungsmaterialschlauch abgesaugt, und zwar entfernt werden, um bevorzugt eine zumindest teilweise kontaktbündige Anordnung des Verpackungsmaterialschlauchs an dem Füllgut, und zwar eine zumindest teilweise kontaktbündige Verpackung des Füllguts zu erzeugen und/oder bereitzustellen, besonders bevorzugt vor der Siegelung, insbesondere der Längssiegelung und/oder Quersiegelung des Verpackungsmaterialschlauchs.

Wenn das Heizelement zumindest teilweise in die Luftabsaugungseinheit integriert ist, kann eine Beheizung mit einer Luftabsaugung kombiniert und eine besonders effiziente Ausgestaltung einer Verpackungsformvorrichtung, vorteilhaft einer Luftabsaugungseinheit, bereitgestellt werden. Zudem kann die Verpackungsformvorrichtung kompakter gestaltet werden. Bevorzugt ist die Luftabsaugungseinheit in zumindest dem montierten Zustand dazu vorgesehen, Luft aus dem Bereich des Verpackungsmaterialschlauchs abzusaugen und gleichzeitig, insbesondere zeitgleich, den Verpackungsmaterialschlauch zu beheizen und/oder warm zu halten. Die Luftabsaugungseinheit kann zumindest teilweise und vorteilhaft vollständig einstückig, insbesondere einteilig, ausgebildet sein. Unter "einstückig" soll zumindest stoffschlüssig verbunden verstanden werden, beispielsweise durch einen Klebeprozess, einen Anspritzprozess und/oder Schweißprozess und/oder einen anderen, dem Fachmann als sinnvoll erscheinenden Prozess. Unter "einteilig" soll in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, und/oder in einem Stanzverfahren und/der in einem Blechbiegeprozess und/oder in einem Druckprozess, beispielsweise einem 3D-Druckprozesses, und/oder mittels Thermoformen oder vorteilhaft mittels eines Tiefziehprozesses und/oder einem anderen dem Fachmann als sinnvoll erscheinenden Verfahren aus dem einzelnen Rohling hergestellt.

Ferner wird vorgeschlagen, dass das Heizelement in einem montierten Zustand in einem Heizelementaufnahmebereich der Luftabsaugungseinheit angeordnet ist. Damit kann eine besonders kompakte Verpackungsformvorrichtung, insbesondere Luftabsaugungseinheit, bereitgestellt werden. Ferner kann eine Effizienz hinsichtlich einer Anordnung eines Heizelements und/oder eine Beheizung eines Verpackungsmaterialschlauchs optimiert werden. Zudem kann ein Komfort gesteigert und eine Verletzungsgefahr für einen Bediener und/oder Benutzer gesenkt werden, da das Heizelement vorzugsweise in einem Innenraum der Luftabsaugungseinheit angeordnet ist.

Insbesondere handelt es sich bei dem montierten Zustand um den bereits genannten montierten Zustand, in welchem insbesondere die Einheiten und/oder Elemente der Verpackungsformvorrichtung zur Beheizung und/oder Siegelung und/oder Transportierung des Verpackungsmaterialschlauchs montiert sind. Der Heizelementaufnahmebereich könnte sich zumindest teilweise an der Oberseite der Luftabsaugungseinheit befinden. Vorteilhaft ist der Heizelementaufnahmebereich in einem Inneren der Luftabsaugungseinheit angeordnet und bildet insbesondere einen Innenraum der Luftabsaugungseinheit aus. Der Heizelementaufnahmebereich könnte sich in einer Haupterstreckungsrichtung der Luftabsaugungseinheit betrachtet über zumindest 30 %, vorteilhaft zumindest 50 % und vorzugsweise zumindest 80 % einer Gesamterstreckung der Luftabsaugungseinheit erstrecken. Vorteilhaft erstreckt sich der Heizelementaufnahmebereich, in Haupterstreckungsrichtung der Luftabsaugungseinheit betrachtet, zumindest im Wesentlichen vollständig über die Gesamterstreckung der Luftabsaugungseinheit, wobei insbesondere der Heizelementaufnahmebereich zumindest auf einer Endseite der Luftabsaugungseinheit von zumindest einer Wandung der Luftabsaugungseinheit begrenzt sein kann. Bevorzugt ist die Haupterstreckungsrichtung der Luftabsaugungseinheit in dem montierten Zustand der Luftabsaugungseinheit zumindest im Wesentlichen parallel zu der Transportrichtung des Verpackungsmaterialschlauchs ausgerichtet. Unter einer "Haupterstreckungsrichtung" eines Objekts soll vorliegend eine Richtung verstanden werden, welche parallel zu einer längsten Kante eines kleinsten geometrischen Quaders verläuft, welcher das Objekt gerade noch vollständig umschließt. Insbesondere erstreckt sich die Haupterstreckungsrichtung des Objekts innerhalb einer Haupterstreckungsebene des Objekts.

Des Weiteren wird vorgeschlagen, dass das Heizelement als ein Heizstab ausgebildet ist, welcher in dem montierten Zustand in dem länglich ausgebildeten Heizelementaufnahmebereich angeordnet ist. Dadurch kann eine besonders hohe Effizienz in einer Beheizung realisiert und/oder bereitgestellt werden. Mittels eines Heizstabs kann elektrischer Strom zumindest im Wesentlichen im Verhältnis 1:1 direkt in Wärmeenergie umgewandelt und damit eine Wärme-/Hitzeübertragung auf einen Verpackungsmaterialschlauch weiter optimiert werden.

Insbesondere ist der Heizelementaufnahmebereich länglich ausgebildet und erstreckt sich parallel zu der Haupterstreckungsrichtung der Luftabsaugungseinheit. Vorteilhaft ist der Heizstab eine elektrische Widerstandsheizung, welche sich unter Spannung erwärmt. Der Heizstab kann einen thermischen Wirkungsgrad von zumindest 90 %, vorteilhaft von zumindest 99 % und besonders bevorzugt von 100 % aufweisen, wobei insbesondere elektrischer Strom nahezu in einem Verhältnis 1:1 in Wärmeenergie umwandelbar ist.

Denkbar wäre, dass der Heizelementaufnahmebereich zumindest teilweise oder vollständig unabhängig von einem Bereich der Luftabsaugungseinheit, durch und/oder in welchem die Luft absaugbar ist, angeordnet ist. Beispielsweise könnte das Heizelement in dem Heizelementaufnahmebereich neben und/oder oberhalb und/oder unterhalb des Bereichs der Luftabsaugungseinheit, durch und/oder in welchem die Luft absaugbar ist, angeordnet sein.

Um eine Beheizung eines Verpackungsmaterialschlauchs und gleichzeitige Absaugung von Luft zu optimieren und/oder eine Verpackungsformvorrichtung, insbesondere eine Luftabsaugungseinheit, kompakter und/oder effizienter auszugestalten, wird vorgeschlagen, dass der Heizelementaufnahmebereich sich mit einem Luftabsaugbereich der Luftabsaugungseinheit zumindest teilweise überlappt. Bevorzugt sind der Heizelementaufnahmebereich und der Luftabsaugbereich zumindest im Wesentlichen identisch oder überlappen zumindest im Wesentlichen vollständig. Ferner kann der Heizelementaufnahmebereich einen Teilbereich des Luftabsaugbereichs ausbilden, wobei der Luftabsaugbereich eine größere Erstreckung aufweisen kann als der Heizelementaufnahmebereich. Unter "zumindest im Wesentlichen" soll in diesem Zusammenhang verstanden werden, dass eine Abweichung von einem vorgegebenen Wert und/oder einer Ausrichtung und/oder einer Position und/oder einer Erstreckung weniger als 25 %, vorzugsweise weniger als 10 % und besonders bevorzugt weniger als 5 % des vorgegebenen Werts und/oder der Ausrichtung /oder der Position und/oder der Erstreckung beträgt.

Um eine Flexibilität, einen Komfort sowie eine Effizienz weiter zu steigern, wird vorgeschlagen, dass das Heizelement aus dem Heizelementaufnahmebereich reversibel entnehmbar ist. Hierdurch kann eine Demontage des Heizelements, beispielsweise zu Wartungszwecken, und zwar zu einem Austausch und/oder einer Reinigung optimiert werden. Das Heizelement kann in dem Heizelementaufnahmebereich mittels einer kraft- und/oder formschlüssigen Verbindung, wie beispielsweise einer Rastverbindung und/oder Steckverbindung und/oder Drehverbindung und/oder Schraubverbindung und/oder Nietverbindung und/oder dergleichen fixiert sein. Vorteilhaft ist das Heizelement aus dem Heizelementaufnahmebereich zerstörungsfrei entnehmbar und bevorzugt, beispielsweise nach einem Austausch oder einer Reinigung wieder in dem Heizelementaufnahmebereich montierbar. Das Luftabsaugungseinheit könnte eine, insbesondere verschließbare, Montageöffnung zur Montage und/oder Demontage des Heizelements aufweisen.

Ferner wird vorgeschlagen, dass das Heizelement als ein Nachrüstteil ausgebildet ist. Dadurch kann ein besonders hoher Komfort und/oder eine besonders hohe Flexibilität bereitgestellt werden. Damit kann ein Heizelement bei Bedarf zusätzlich angeordnet und verwendet werden. Dadurch kann wiederum eine Kosten- und/oder eine Produkt- und/oder Betriebs- und/oder eine Arbeitseffizienz gesteigert werden.

Besonders bevorzugt ist das Heizelement ein Zubehörteil, welches vorzugsweise bei Bedarf, und zwar zusätzlich einsetzbar und/oder verwendbar ist. Das Heizelement kann an und/oder in der vollfunktionsfähigen Längssiegeleinheit, insbesondere nach Herstellung und/oder Einbau der Längssiegeleinheit zwischen der ersten Siegeleinheit und/oder der zweiten Siegeleinheit, nachträglich anordenbar und/oder montierbar sein, vorzugsweise nach dem sogenannten "Add-One" Prinzip. Insbesondere ist das Heizelement ein Nachrüst-Kit. Denkbar wäre auch, dass das Heizelement vor dem Einbau und/oder der Anordnung der Längssiegeleinheit zwischen der ersten Siegeleinheit und/oder der zweiten Siegeleinheit an und/oder in der Längssiegeleinheit anordenbar und/oder montierbar ist. Alternativ und/oder zusätzlich kann die Luftabsaugungseinheit als ein Nachrüstteil ausgebildet sein. Besonders bevorzugt ist die Luftabsaugungseinheit reversibel in der Öffnung und/oder Aussparung des Auflageelements anordenbar. Ferner kann die Luftabsaugungseinheit relativ zu der Längssiegeleinheit beweglich gelagert sein. Zu Wartungszwecken, beispielsweise zur Reinigung und/oder Reparatur, und/oder zur Demontage und/oder Montage und/oder bei Nichtgebrauch könnte die Luftabsaugungseinheit relativ zu der Längssiegeleinheit bewegbar, beispielswiese mittels zumindest einer Scharnierverbindung relativ zu der Luftabsaugungseinheit schwenkbar, sein. Denkbar wäre auch, dass das thermische Element als ein Nachrüstteil ausgebildet ist.

Das Heizelement kann zu einer unmittelbaren Beheizung des Verpackungsmaterialschlauchs vorgesehen sein. Damit kann eine besonders effiziente Beheizung realisiert und eine Wärme-/Hitzeübertragung auf den Verpackungsmaterialschlauch optimiert sowie eine Abkühlung und/oder Auskühlung des Verpackungsmaterialschlauchs zumindest abschnittsweise, vorteilhaft in einem Bereich zwischen einer Formeinheit und einer Quersiegeleinheit, reduziert und bevorzugt verhindert werden. Das Heizelement kann in einem direkten Kontakt mit dem Verpackungsmaterialschlauch angeordnet sein und den Verpackungsmaterialschlauch direkt beheizen. Vorteilhaft ist das Heizelement zu einer direkten Kontaktierung mit dem Verpackungsmaterialschlauch vorgesehen.

Alternativ wird vorgeschlagen, dass das Heizelement zu einer mittelbaren Beheizung des Verpackungsmaterialschlauchs vorgesehen ist. Hierdurch kann ein Komfort gesteigert werden, und zwar dahingehend, dass eine Verletzungsgefahr, hinsichtlich einer Verbrennung, für einen Bediener und/oder Benutzer reduziert oder verhindert werden kann. Zudem kann eine besonders schonende und/oder effiziente Beheizung eines Verpackungsmaterialschlauchs bereitgestellt werden.

Das Heizelement kann den Verpackungsmaterialschlauch indirekt beheizen. Das Heizelement könnte die Luftabsaugungseinheit zumindest teilweise oder die gesamte Luftabsaugungseinheit beheizen. Vorteilhaft beheizt das Heizelement zumindest eine Wandung der Luftabsaugungseinheit, und zwar insbesondere diejenige Wandung, welche die bereits genannten Oberseite aufweist, an welcher der Verpackungsmaterialschlauch im montierten Zustand anliegt und/oder relativ zu welcher der Verpackungsmaterialschlauch entlang der Transportrichtung führbar ist.

Zudem wird vorgeschlagen, dass die Heizeinheit zumindest ein weiteres Heizelement aufweist, welches zwischen der zweiten Siegeleinheit und zumindest einer nachfolgenden dritten Siegeleinheit der Reihe von Siegeleinheiten angeordnet ist. Dadurch kann eine Effizienz, hinsichtlich einer Beheizung sowie Formung und/oder Verschließung und/oder Versiegelung und/oder Handhabung des Verpackungsmaterialschlauchs weiter gesteigert werden. Damit kann das Abkühlen und/oder Auskühlen gerade nach einer Formung und/oder Verformung von Verpackungsmaterial zu dem Verpackungsmaterialschlauch und vor einer Quersiegelung des Verpackungsmaterialschlauchs zumindest abschnittsweise weiter reduziert und bevorzugt verhindert werden.

In Transportrichtung des Verpackungsmaterialschlauchs betrachtet ist die dritte Siegeleinheit hinter der zweiten Siegeleinheit angeordnet. Denkbar wäre auch, dass die Reihe von Siegeleinheiten noch weitere Siegeleinheiten aufweist, welche insbesondere entlang der Transportrichtung des Verpackungsmaterialschlauchs betrachtet, nach der dritten Siegeleinheit angeordnet sind. Das weitere Heizelement könnte sich in einer Ausgestaltung von dem Heizelement unterscheiden. Beispielsweise kann zwischen der ersten Siegeleinheit und der zweiten Siegeleinheit die bereits genannte Luftabsaugungseinheit mit dem integrierten Heizelement und zwischen der zweiten Siegeleinheit und der dritten Siegeleinheit das weitere Heizelement frei von einer weiteren Luftabsaugungseinheit der Verpackungsformvorrichtung angeordnet sein. Das weitere Heizelement kann als die bereits genannte konventionelle Vorheizung ausgebildet sein. Das Heizelement, angeordnet zwischen der ersten Siegeleinheit und der zweiten Siegeleinheit, kann zur mittelbaren, und zwar indirekten Beheizung des Verpackungsmaterialschlauchs und das weitere Heizelement, angeordnet zwischen der zweiten Siegeleinheit und der dritten Siegeleinheit, kann zur unmittelbaren, und zwar direkten Beheizung des Verpackungsmaterialschlauchs vorgesehen sein.

Ferner wird alternativ vorgeschlagen, dass das Heizelement und das weitere Heizelement identisch zueinander ausgebildet sind. Hierdurch kann eine Effizienz, hinsichtlich einer Kosten- und/oder eine Produkt- und/oder Betriebs-und/oder Montageeffizienz und/oder eine Herstellungseffizienz gesteigert werden.

Das Heizelement und das weitere Heizelement können jeweils beide zur indirekten, und zwar mittelbaren Beheizung des Verpackungsmaterialschlauchs vorgesehen sein. Alternativ könnten das Heizelement und das weitere Heizelement jeweils beide zur direkten, und zwar unmittelbaren Beheizung des Verpackungsmaterialschlauchs vorgesehen sein. Mit der Formulierung "identische Objekte" sind in diesem Zusammenhang Objekte gemeint, die vorteilhafterweise die gleiche Struktur und/oder Form und/oder Außenkontur und/oder Bauart und/oder zumindest zu einem Großteil und bevorzugt vollständig die gleiche Materialzusammensetzung aufweisen, sich aber hinsichtlich ihrer Funktionalität, ihres inneren Aufbaus, ihrer Anordnung an einem anderen Objekt und/oder ihrer Ausrichtung bezüglich eines anderen Objekts zumindest teilweise unterscheiden können. Vorzugsweise sind die identischen Objekte jedoch abgesehen von Fertigungstoleranzen und/oder im Bereich von genormten Toleranzen identisch.

Die erfindungsgemäße Verpackungsformvorrichtung und/oder die erfindungsgemäße Verpackungsmaschine sollen/soll hierbei nicht auf die oben beschriebene Anwendung und Ausführungsform beschränkt sein. Insbesondere können/kann die Verpackungsformvorrichtung und/oder die Verpackungsmaschine zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teil einer Verpackungsmaschine mit einer Verpackungsformvorrichtung, welche eine Heizeinheit und eine Längssiegeleinheit aufweist,
- Fig. 2: eine Detailansicht einer Luftabsaugungseinheit der Verpackungsformvorrichtung gemäß Figur 1,
- Fig. 3: eine Schnittdarstellung der Luftabsaugungseinheit gemäß Figur 2 und eines in der Luftabsaugungseinheit integrierten Heizelements der Heizeinheit,
- Fig. 4: eine weitere Schnittdarstellung der Luftabsaugungseinheit und des Heizelements gemäß Figur 3 und
- Fig. 5: eine Heizeinheit einer Verpackungsformvorrichtung in einem weiteren Ausführungsbeispiel.

### Beschreibung der Ausführungsbeispiele

Der Übersichtlichkeit halber ist nachfolgend von mehrfach vorhandenen Objekten in den Figuren, wenn nicht anders angegeben, jeweils lediglich eines mit einem Bezugszeichen versehen. Die Ausführungen und Beschreibungen zu einem Objekt können auf die weiteren identischen Objekte übertragen werden. Ferner handelt es sich bei den vorliegenden Figuren um schematische und nicht maßstabsgetreue Darstellungen.

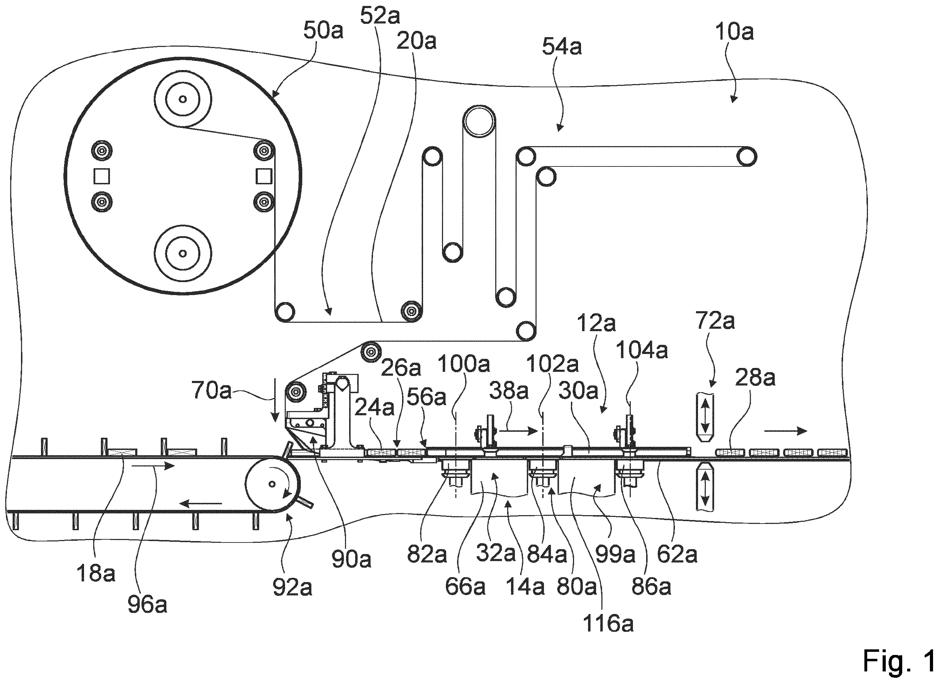

Figur 1 zeigt einen Teil einer Verpackungsmaschine 10a. Vorliegend ist die Verpackungsmaschine 10a als eine Schlauchbeutelmaschine ausgebildet. Die Verpackungsmaschine 10a umfasst eine Verpackungsformvorrichtung 12a. In dieser beispielhaften Ausführung ist die Verpackungsformvorrichtung 12a als eine horizontale Verpackungsformvorrichtung 12a ausgebildet. Alternativ und/oder zusätzlich kann die Verpackungsformvorrichtung 12a als eine vertikale Verpackungsformvorrichtung 12a ausgebildet sein. Die Verpackungsformvorrichtung 12a ist zumindest dazu vorgesehen, Verpackungsmaterial 20a zu formen, und zwar bevorzugt zu einem Verpackungsmaterialschlauch 24a. Zur Formung des Verpackungsmaterials 20a in den Verpackungsmaterialschlauch 24a weist die Verpackungsformvorrichtung 12a zumindest eine Formeinheit 90a auf. Die Formeinheit 90a ist in dieser beispielhaften Ausgestaltung als eine Formschulter ausgebildet.

In Figur 1 ist verdeutlicht, dass die Verpackungsmaschine 10a zumindest eine Verpackungsmaterialabwickeleinheit 50a aufweist, welche dazu vorgesehen ist, das Verpackungsmaterial 20a in Form einer Verpackungsmaterialrolle aufzunehmen und das Verpackungsmaterial 20a zur Weiterführung als Verpackungsmaterialbahn 52a abzuwickeln. Ferner ist die Verpackungsmaterialabwickeleinheit 50a dazu vorgesehen, das Verpackungsmaterial 20a einer Verpackungsmaterialzuführeinheit 54a der Verpackungsmaschine 10a zuzuführen. Die Verpackungsmaterialzuführeinheit 54a führt der Formeinheit 90a das Verpackungsmaterial 20a zu. Die Verpackungsmaterialzuführeinheit 54a ist entlang einer Transportrichtung 38a des Verpackungsmaterialschlauchs 24a betrachtet vor der Formeinheit 90a angeordnet. Das Verpackungsmaterial 20a ist in dieser beispielhaften Ausgestaltung zumindest zu einem Großteil aus Kunststoff ausgebildet. Alternativ und/oder zusätzlich könnte Verpackungsmaterial 20a aus einem Mineral, beispielsweise Papier, und/oder einem Metall, beispielsweise Aluminium, und/oder einem Verbundmaterial ausgebildet sein.

Vorliegend ist die horizontale Verpackungsformvorrichtung 12a dazu vorgesehen, zumindest den Verpackungsmaterialschlauch 24a entlang einer horizontalen, und zwar entlang der zumindest im Wesentlichen senkrecht zu einer Gravitationskraftwirkrichtung 70a verlaufenden, Transportrichtung 38a zu führen. Ferner ist die Verpackungsformvorrichtung 12a vorliegend zumindest zu einem Abpacken und/oder einer Befüllung und/oder einer Verpackung von Füllgütern 18a vorgesehen. Bei dem Füllgut 18a handelt es sich in dieser beispielhaften Ausgestaltung um Schokoriegel. Alternativ kann es sich bei dem Füllgut 18a um ein jegliches denkbares, einem Fachmann als sinnvoll erscheinendes Füllgut handeln. Die Verpackungsmaschine 10a weist zumindest eine Füllgutzuführeinheit 92a auf, welche dazu vorgesehen ist, die zu verpackenden Füllgüter 18a zur Verpackung und/oder Umhüllung mittels des Verpackungsmaterialschlauchs 24a in einen Bereich der Verpackungsformvorrichtung 12a, und zwar zumindest der Formeinheit 90a, zu transportieren und/oder zu fördern. Eine Transportrichtung 96a der Füllgüter 18a verläuft zumindest im Wesentlichen parallel zu der Transportrichtung 38a des Verpackungsmaterialschlauchs 24a. Vorliegend verlaufen die Transportrichtung 96a der Füllgüter 18a und die Transportrichtung 38a des Verpackungsmaterialschlauchs 24a in einer gemeinsamen Ebene, und zwar einer Horizontalebene. Die Füllgutzuführeinheit 92a ist entlang der Transportrichtung 38a des Verpackungsmaterialschlauchs 24a betrachtet vor der Formeinheit 90a angeordnet.

Mittels des Verpackungsmaterials 20a kann das Füllgut 18a zumindest teilweise verpackt werden. Der Verpackungsmaterialschlauch 24a ist zu einer Verpackung, und zwar zu einer zumindest teilweisen Umhüllung von zumindest dem Füllgut 18a vorgesehen. Innerhalb des Verpackungsmaterialschlauchs 24a, und zwar in einem Füllgutaufnahmebereich 26a des Verpackungsmaterialschlauchs 24a ist zumindest das Füllgut 18a und vorliegend eine Vielzahl von Füllgütern 18a angeordnet und/oder anordenbar. Ferner weist die Verpackungsformvorrichtung 12a zumindest einen Verpackungsaufnahmebereich 56a auf, in welchem der Verpackungsmaterialschlauch 24a und zumindest das Füllgut 18a aufnehmbar und/oder aufgenommen sind. Der Füllgutaufnahmebereich 26a ist Teil des Verpackungsaufnahmebereichs 56a. Der Verpackungsmaterialschlauch 24a ist in dem Verpackungsaufnahmebereich 56a angeordnet und/oder anordenbar. Ferner begrenzt und/oder definiert der Verpackungsmaterialschlauch 24a, angeordnet in dem Verpackungsaufnahmebereich 56a, zumindest teilweise den Füllgutaufnahmebereich 26a.

Die Verpackungsmaschine 10a weist zumindest eine Längssiegeleinheit 80a auf, welche dazu vorgesehen ist eine, und zwar zumindest im Wesentlichen parallel zu der Transportrichtung 38a des Verpackungsmaterialschlauchs 24a verlaufende, Längssiegelnaht des Verpackungsmaterialschlauchs 24a zu erstellen und/oder zu erzeugen, beispielsweise durch einen Druck und/oder einen Wärmeeintrag auf den Verpackungsmaterialschlauch 24a. Die Längssiegeleinheit 80a ist entlang der Transportrichtung 38a des Verpackungsmaterialschlauchs 24a betrachtet hinter der Formeinheit 90a angeordnet (vgl. Figur 1). Die Längssiegeleinheit 80a weist eine Reihe von Siegeleinheiten 82a, 84a, 86a auf. Die Reihe von Siegeleinheiten 82a, 84a, 86a umfasst in dieser beispielhaften Ausgestaltung eine erste Siegeleinheit 82a, eine anschließende zweite Siegeleinheit 84a und eine anschließende dritte Siegeleinheit 86a auf. Alternativ könnte die Reihe von Siegeleinheiten 82a, 84a, 86a auch lediglich aus der ersten Siegeleinheit 82a und der anschließenden zweiten Siegeleinheit 84a oder weiteren, beispielsweise insgesamt zumindest vier, sechs oder zehn Siegeleinheiten bestehen.

Vorliegend sind die Siegeleinheiten 82a, 84a, 86a der Reihe von Siegeleinheiten 82a, 84a, 86a in Transportrichtung 38a des Verpackungsmaterialschlauchs 24a-betrachtet hintereinander angeordnet. Die Siegeleinheiten 82a, 84a, 86a, und zwar die erste Siegeleinheit 82a und/oder zumindest die zweite Siegeleinheit 84a können jeweils zumindest ein Paar von, insbesondere mit einem Profil versehenen, mit Druck beaufschlagbaren und/oder beheizbaren, Siegelrollen aufweisen. Vorliegend weist die erste Siegeleinheit 82a ein erstes Paar von Siegelrollen auf. Fener weist die zweite Siegeleinheit 84a ein zweites Paar von Siegelrollen auf. Die dritte Siegeleinheit 86a weist ein drittes Paar von Siegelrollen auf. Die erste Siegeleinheit 82a und/oder die zweite Siegeleinheit 84a und/oder die dritte Siegeleinheit 86a sind zu einer zumindest abschnittsweisen Siegelung des Verpackungsmaterialschlauchs 24a und/oder zu einem Transport und/oder Vorschub des Verpackungsmaterialschlauchs 24a entlang der Transportrichtung 38a vorgesehen. In dieser beispielhaften Ausgestaltung ist die erste Siegeleinheit 82a lediglich zum Vorschub und/oder zur Transportierung und/oder Führung des Verpackungsmaterialschlauchs 24a entlang der Transportrichtung 38a des Verpackungsmaterialschlauchs 24a, und zwar ausgehend von der Formeinheit 90a betrachtet, vorgesehen und ist frei von einer Siegelfunktion zur Erzeugung der Längssiegelnaht für den Verpackungsmaterialschlauch 24a. Alternativ und/oder zusätzlich könnte zumindest die zweite Siegeleinheit 84a lediglich zum Vorschub und/oder zur Transportierung und/oder Führung des Verpackungsmaterialschlauchs 24a entlang der Transportrichtung 38a des Verpackungsmaterialschlauchs 24a, und zwar ausgehend von der Formeinheit 90a betrachtet, vorgesehen und frei von einer Siegelfunktion zur Erzeugung der Längssiegelnaht für den Verpackungsmaterialschlauch 24a sein. Vorliegend sind zumindest die zweite Siegeleinheit 84a und die dritte Siegeleinheit 86a zur zumindest teilweisen und zumindest abschnittsweisen Siegelung des Verpackungsmaterialschlauchs 24a vorgesehen.

Die erste Siegeleinheit 82a, die zweite Siegeleinheit 84a und die dritte Siegeleinheit 86a transportieren jeweils durch Rotation der Paare von Siegelrollen den Verpackungsmaterialschlauch 24a zumindest abschnittsweise, und zwar in Transportrichtung 38a des Verpackungsmaterialschlauchs 24. Vorliegend sind jeweils die Paare von Siegelrollen der ersten Siegeleinheit 82a, der zweiten Siegeleinheit 84a und der dritten Siegeleinheit 86a zur zumindest abschnittsweisen Beheizung und/oder zum Warmhalten des Verpackungsmaterialschlauchs 24a und/oder zur Erzeugung der Längssiegelnaht des Verpackungsmaterialschlauchs 24a beheizbar. Denkbar wäre auch, dass das/die Paar/Paare von Siegelrollen der ersten Siegeleinheit 82a und/oder der zweiten Siegeleinheit 84a unbeheizt sind.

Ferner weist die Verpackungsmaschine 10a zumindest eine Quersiegeleinheit 72a auf, welche dazu vorgesehen ist, nach jeweils einem Füllgut 18a, welches in dem Füllgutaufnahmebereich 26a angeordnet ist, Quersiegelnähte des Verpackungsmaterialschlauchs 24a, welche zumindest im Wesentlichen senkrecht zu der Transportrichtung 38a des Verpackungsmaterialschlauchs 24a verlaufen, zu erstellen und/oder zu erzeugen, und zwar beispielsweise durch gezielten Druck und/oder durch einen Wärmeeintrag auf den Verpackungsmaterialschlauch 24a. Die Quersiegeleinheit 72a ist dazu vorgesehen, den Verpackungsmaterialschlauch 24a in einzelne Verpackungen 28a, wobei jeweils eine Verpackung 28a zumindest eines der Füllgüter 18a umschließt, zu vereinzeln und/oder abzutrennen. Die Quersiegeleinheit 72a ist entlang der Transportrichtung 38a des Verpackungsmaterialschlauchs 24a betrachtet nach der Formeinheit 90a, und zwar vorliegend nach der Längssiegeleinheit 80a angeordnet. Mittels zumindest des Paars von Siegelrollen 84a ist der Verpackungsmaterialschlauch 24a von der Formeinheit 90a zu der Quersiegeleinheit 72a transportierbar.

Der Verpackungsaufnahmebereich 56a erstreckt sich entlang der Transportrichtung 38a des Verpackungsmaterialschlauchs 24a betrachtet, zumindest abschnittsweise zwischen der Formeinheit 90a und der Quersiegeleinheit 72a. Der Verpackungsaufnahmebereich 56a ist relativ zu der Längssiegeleinheit 80a ausgerichtet. Der Füllgutaufnahmebereich 26a erstreckt sich entlang der Transportrichtung 38a des Verpackungsmaterialschlauchs 24a betrachtet, zumindest abschnittsweise zwischen der Formeinheit 90a und der Quersiegeleinheit 72a. Vorliegend erstreckt sich der Füllgutaufnahmebereich 26a relativ zu der Längssiegeleinheit 80a. Mittels der Längssiegeleinheit 80a, und zwar der Reihe von Siegeleinheiten 82a, 84a, 86a, welche in Transportrichtung 38a des Verpackungsmaterialschlauchs 24a betrachtet hintereinander angeordnet sind, ist der Verpackungsmaterialschlauch 24a von der Formeinheit 90a zu der Quersiegeleinheit 72a transportierbar.

Die Verpackungsformvorrichtung 12a weist zumindest ein Auflageelement 62a auf, bezüglich welchem dar Verpackungsmaterialschlauch 24a transportierbar ist. Das Auflageelement 62a ist vorliegend als Arbeitsplatte ausgebildet. Das Auflageelement 62a erstreckt sich zumindest im Wesentlichen parallel zu der Transportrichtung 38a des Verpackungsmaterialschlauchs 24a Die Füllgutzuführeinheit 92a, die Längssiegeleinheit 80a, und zwar die Reihe von Siegeleinheiten 82a, 84a, 86a und die Quersiegeleinheit 72a sind zumindest teilweise und/oder zumindest abschnittsweise innerhalb und/oder unterhalb und/oder oberhalb des Auflageelements 62a angeordnet und/oder erstrecken/erstreckt sich zumindest abschnittsweise und/oder zumindest teilweise durch das Auflageelement 62a hindurch. Vorliegend ist die Formeinheit 90a auf einer ersten Seite des Auflageelements 62a angeordnet, und zwar auf welcher die Füllgutzuführeinheit 92a angeordnet ist (vgl. Figur 1). Ferner ist die Quersiegeleinheit 72a auf einer der ersten Seite gegenüberliegenden zweiten Seite des Auflageelements 62a angeordnet. Der Verpackungsmaterialschlauch 24a erstreckt sich zumindest abschnittsweise durch das Auflageelement 62a hindurch. In Gravitationskraftwirkrichtung 70a betrachtet ist die Längssiegeleinheit 80a zumindest teilweise unterhalb einer Oberseite des Auflageelements 62a angeordnet. Vorliegend verlaufen Rotationsachsen 100a, 102a, 104a der Paare von Siegelrollen der ersten Siegeleinheit 82a, der zweiten Siegeleinheit 84a und der dritten Siegeleinheit 86a zumindest im Wesentlichen senkrecht zu einer Haupterstreckungsebene des Auflageelements 62a.

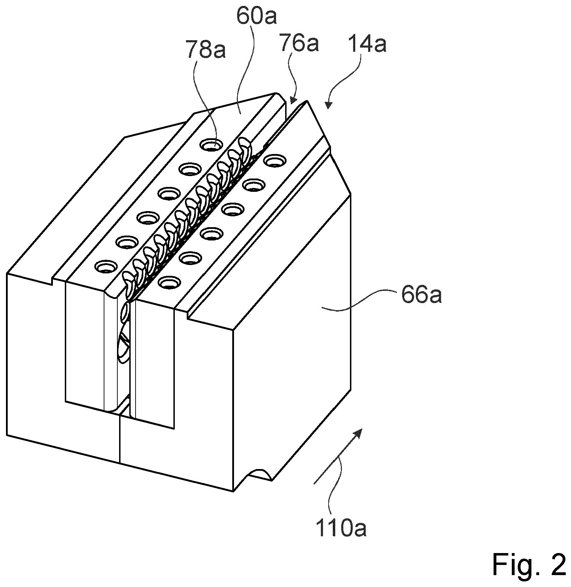

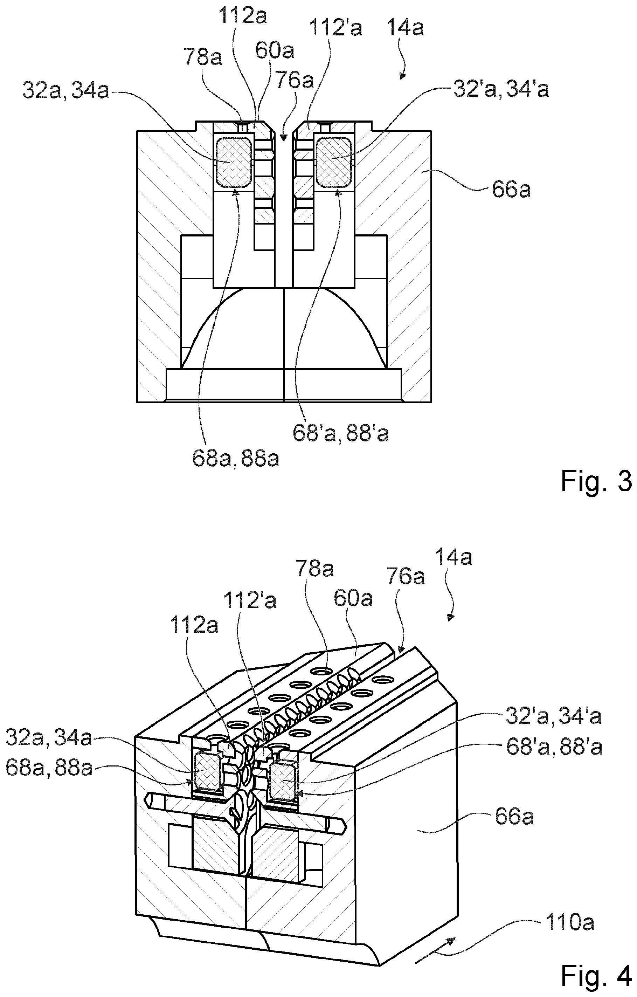

In dieser beispielhaften Ausgestaltung weist die Verpackungsformvorrichtung 12a eine zumindest abschnittsweise zwischen der ersten Siegeleinheit 82a und der zweiten Siegeleinheit 84a angeordnete Luftabsaugungseinheit 66a zur Absaugung von Luft aus zumindest einem Bereich des Verpackungsmaterialschlauchs 24a auf. Die Luftabsaugungseinheit 66a ist zur Absaugung von Luft aus dem Füllgutaufnahmebereich 26a innerhalb des Verpackungsmaterialschlauchs 24a und/oder zur Absaugung von Luft aus dem Verpackungsmaterialaufnahmebereich 56a, und zwar einem Umgebungsbereich des Verpackungsmaterialschlauchs 24a vorgesehen. In den Figuren 2 bis 4 sind Ansichten der Luftabsaugungseinheit 66a gezeigt, wobei die Luftabsaugungseinheit 66a gemäß der Figur 2 ungeschnitten und gemäß den Figuren 3 und 4 geschnitten dargestellt ist

Eine Oberseite 60a der Luftabsaugungseinheit 66a ist in dem montierten Zustand zumindest im Wesentlichen flächenbündig mit der Oberseite des Auflageelements 62a angeordnet. In dem montierten Zustand weist die Luftabsaugungseinheit 66a einen direkten Kontakt mit dem Verpackungsmaterialschlauch 24a auf. Vorliegend weist die Luftabsaugungseinheit 66a eine Führungsnut 76a zur Führung des Verpackungsmaterialschlauchs 24a entlang der Transportrichtung 38a auf. Die Luftabsaugungseinheit 66a kann die Luft durch Erzeugung eines Unterdrucks und/oder eines Vakuums absaugen. Die Luftabsaugungseinheit 66a weist eine Mehrzahl von Öffnungen 78a auf, durch welche die Luft absaugbar ist. Die Öffnungen 78a sind auf der Oberseite 60a in einer Reihe angeordnet. Im Bereich der Führungsnut 76a sind die Öffnungen matrixartig angeordnet. In zumindest einem Betriebszustand können durch die Öffnungen 78a die Luft aus dem Bereich des Verpackungsmaterialschlauchs 24a abgesaugt und damit der Verpackungsmaterialschlauch 24a gegen die Luftabsaugungseinheit 66a, und zwar zumindest die Oberseite 66a und/oder die Führungsnut 76a gepresst und/oder gedrückt und/oder angesaugt und/oder angezogen werden. Alternativ und/oder zusätzlich kann bei Absaugung der Luft aus dem Füllgutaufnahmebereich 26a innerhalb des Verpackungsmaterialschlauchs 24a überschüssige Luft zwischen dem Füllgut 18a und dem Verpackungsmaterialschlauch 24a abgesaugt, und zwar entfernt werden, um bevorzugt eine zumindest teilweise kontaktbündige Anordnung des Verpackungsmaterialschlauchs 24a an dem Füllgut 18a, und zwar eine zumindest teilweise kontaktbündige Verpackung des Füllguts 18a zu erzeugen und/oder bereitzustellen, und zwar besonders bevorzugt vor der Siegelung des Verpackungsmaterialschlauchs 24a.

Die Verpackungsformvorrichtung 12a weist zu einer zumindest abschnittsweisen Beheizung des Verpackungsmaterialschlauchs 24a zumindest eine Heizeinheit 14a auf. Vorliegend umfasst die Heizeinheit 14a zumindest ein Heizelement 32a, welches zumindest teilweise zwischen der ersten Siegeleinheit 82a und der zweiten Siegeleinheit 84a angeordnet ist. Das Heizelement 32a ist dazu vorgesehen, den Verpackungsmaterialschlauch 24a zumindest abschnittsweise entlang der Transportrichtung 38a des Verpackungsmaterialschlauchs 24a zu beheizen und/oder warm zu halten.

In dieser beispielhaften Ausgestaltung ist das Heizelement 32a zumindest teilweise in die Luftabsaugungseinheit 66a integriert (vgl. Figur 3). Die Figuren 3 und 4 zeigen jeweils eine unterschiedliche Schnittdarstellung der Luftabsaugungseinheit 66a und des Heizelements 32a zur Verdeutlichung einer Anordnung des Heizelements 32a in der Luftabsaugungseinheit 66a. Vorliegend umfasst die Heizeinheit 14a zwei Heizelemente 32a, 32'a, welche zueinander identisch ausgebildet sind. Jedes der zwei Heizelemente 32a, 32'a ist in einem Heizelementaufnahmebereich 68a, 68'a der Luftabsaugungseinheit 66a angeordnet. Der Heizelementaufnahmebereich 68a und der Heizelementaufnahmebereich 68'a sind parallel zueinander ausgerichtet. Vorliegend sind der Heizelementaufnahmebereich 68a und der Heizelementaufnahmebereich 68'a auf sich gegenüberliegenden Seiten der Führungsnut 76a angeordnet. Nachfolgend wird lediglich das Heizelement 32a beschrieben, wobei die Ausführungen und Beschreibungen ebenfalls auf zumindest das Heizelement 32'a übertragbar sind.

Das Heizelement 32a kann als ein Widerstandsheizelement oder ein induktives Heizelement ausgebildet sein. Vorliegend ist das Heizelement 32a als ein Heizstab 34a ausgebildet, welcher in dem Betriebszustand in dem länglich ausgebildeten Heizelementaufnahmebereich 68a angeordnet ist. Der Heizelementaufnahmebereich 68a erstreckt sich in einer Haupterstreckungsrichtung 110a der Luftabsaugungseinheit 66a betrachtet, zumindest im Wesentlichen vollständig über eine Gesamterstreckung der Luftabsaugungseinheit 66a, wobei an zumindest einer Endseite der Luftabsaugungseinheit 66a, der Heizelementaufnahmebereich 68a von zumindest einer Wandung der Luftabsaugungseinheit 66a begrenzt ist (vgl. Figur 2). Vorliegend ist die Haupterstreckungsrichtung 110a der Luftabsaugungseinheit 66a in dem montierten Zustand der Luftabsaugungseinheit 66a zumindest im Wesentlichen parallel zu der Transportrichtung 38a des Verpackungsmaterialschlauchs 24a ausgerichtet.

Die Luftabsaugungseinheit 66a ist in zumindest dem montierten Zustand dazu vorgesehen, Luft aus dem Bereich des Verpackungsmaterialschlauchs 24a abzusaugen und gleichzeitig, und zwar zeitgleich, den Verpackungsmaterialschlauch 24a zu beheizen und/oder warm zu halten. In dieser beispielhaften Ausgestaltung überlappt der Heizelementaufnahmebereich 68a zumindest teilweise mit einem Luftabsaugbereich 88a der Luftabsaugungseinheit 66a. Um eine Effizienz hinsichtlich einer Beheizung des Verpackungsmaterialschlauchs 24a zu steigern, überlappen der Heizelementaufnahmebereich 68a und der Luftabsaugbereich 88a zumindest im Wesentlichen vollständig. Vorliegend ist der Heizelementaufnahmebereich 68a ein Teilbereich des Luftabsaugbereichs 88a. Das Heizelement 32a ist zu einer mittelbaren Beheizung des Verpackungsmaterialschlauchs 24a vorgesehen. Vorliegend ist das Heizelement dazu vorgesehen, zumindest eine Wandung 112a der Luftabsaugungseinheit 66a, und zwar diejenige Wandung 112a zu beheizen, welche die bereits genannte Oberseite 60a aufweist, an welcher der Verpackungsmaterialschlauch 24a im montierten Zustand anliegt und/oder relativ zu welcher der Verpackungsmaterialschlauch 24a entlang der Transportrichtung 38a führbar ist.

Das Heizelement 32a ist aus dem Heizelementaufnahmebereich 68a reversibel entnehmbar, beispielsweise zu Wartungszwecken, und zwar zur Reparatur oder zu einem Austausch. Vorliegend ist das Heizelement 32a als ein Nachrüstteil ausgebildet. Ferner ist die Luftabsaugungseinheit 66a als ein Nachrüstteil ausgebildet und kann bei Bedarf zusätzlich zwischen der ersten Siegeleinheit 82a und der zweiten Siegeleinheit 84a anordenbar sein.

Vorliegend weist die Heizeinheit 14a zumindest ein weiteres Heizelement 99a auf, welches zwischen der zweiten Siegeleinheit 84a und zumindest der nachfolgenden dritten Siegeleinheit 86a der Reihe von Siegeleinheiten 82a, 84a, 86a angeordnet ist. In dieser beispielhaften Ausgestaltung sind das Heizelement 32a und das weitere Heizelement 99a identisch zueinander ausgebildet. Die Verpackungsformvorrichtung 12a weist eine weitere Luftabsaugungseinheit 116a auf, welche identisch zu der bereits genannten Luftabsaugungseinheit 66a ausgebildet ist. Das weitere Heizelement 99a ist in der weiteren Luftabsaugungseinheit 116a integriert. Alternativ wäre auch denkbar, dass das weitere Heizelement 99a sich von dem bereits genannten Heizelement 32a unterscheidet, und zwar beispielsweise zu einer direkten und unmittelbaren Beheizung des Verpackungsmaterialschlauchs 24a vorgesehen ist. Dadurch könnte auf die weitere Luftabsaugungseinheit 116a verzichtet und das weitere Heizelement 99a in einem direkten Kontakt mit dem Verpackungsmaterialschlauch 24a anordenbar sein.

Ferner weist die Verpackungsformvorrichtung 12a, und zwar die Heizeinheit 14a vorliegend zumindest ein thermisches Element 30a auf, welches den Füllgutaufnahmebereich 26a und den Verpackungsmaterialaufnahmebereich 56a zumindest abschnittsweise umgreift und/oder begrenzt. Das thermische Element 30a ist dazu vorgesehen, den Verpackungsmaterialschlauch 24a zumindest teilweise und abschnittsweise entlang der Transportrichtung 38a, und zwar in Gravitationskraftwirkrichtung 70a betrachtet oberhalb der Oberseite des Auflageelements 62a aufzunehmen und zu beheizen und/oder warm zu halten. Vorliegend ist das thermische Element 30a, entlang der Transportrichtung 38a des Verpackungsmaterialschlauchs 24a betrachtet, in zumindest dem montierten Zustand nach der Formeinheit 90a angeordnet. Figur 1 verdeutlicht den montierten Zustand des thermischen Elements 30a. Das thermische Element 30a ist vorliegend länglich ausgebildet. Das thermische Element 30a besteht zumindest teilweise und vorteilhaft zumindest zu einem Großteil aus einem Metallblech. In dem montierten Zustand erstreckt sich das thermische Element 30a zumindest abschnittsweise zwischen der Formeinheit 90a und der Quersiegeleinheit 72a. Ferner ist das thermische Element 30a als ein Tunnel ausgebildet, innerhalb welchem zumindest abschnittsweise der Verpackungsmaterialschlauch 24a anordenbar und/oder angeordnet ist. Vorliegend ist das thermische Element 30a als ein Nachrüstteil ausgebildet, welches zusätzlich bei Bedarf an dem Auflageelement 62a anordenbar ist.

Das thermische Element 30a ist in dem montierten Zustand relativ zu einer Haupterstreckungsebene der Längssiegeleinheit 80a angeordnet. Das thermische Element 30a kann aktiv, und zwar unmittelbar oder passiv, und zwar mittelbar beheizbar sein. Vorliegend kann das Heizelement 32a das thermische Element 30a zumindest teilweise und/oder zumindest abschnittsweise indirekt, und zwar mittelbar beheizen. Das thermische Element 30a ist dazu vorgesehen, Hitze in einem Heizbereich, und zwar in einem Innenbereich des thermischen Elements 30a, welcher vorteilhaft dem Verpackungsmaterialaufnahmebereich 56a und/oder dem Füllgutaufnahmebereich 26a entspricht, zu stauen, um damit den Verpackungsmaterialschlauch 24a zu beheizen und/oder warm zu halten. Zur Beheizung des Verpackungsmaterialschlauchs 24a wirken das thermische Element 30a und zumindest das Heizelement 32a zusammen. Wenn das thermische Element 30a in Gravitationskraftwirkrichtung 70a oberhalb der Oberseite des Auflageelements 62a und zumindest das Heizelement 32a zumindest teilweise an und/oder unterhalb der Oberseite des Auflageelements 62a angeordnet ist, könnten das Heizelement 32a und das thermische Element 30a gemeinsam den Verpackungsmaterialschlauch 24a von unterschiedlichen Seiten, und zwar gegenüberliegenden Seiten, beheizen und/oder warmhalten, und somit gemeinsam zur Beheizung des Verpackungsmaterialschlauchs 24a beitragen. Dadurch kann eine Effizienz hinsichtlich einer Beheizung des Verpackungsmaterialschlauchs 24a, und zwar zwischen der Formeinheit 90a und der Quersiegeleinheit 72a weiter gesteigert werden.

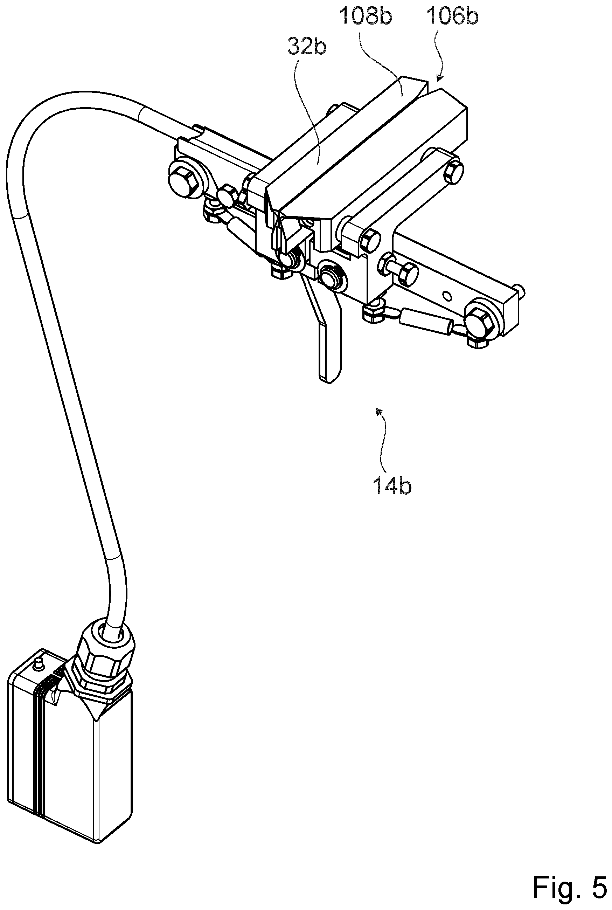

In Figur 5 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des Ausführungsbeispiels der Figuren 1 bis 4 verwiesen werden kann. Zur Unterscheidung der Ausführungsbeispiele ist der Buchstabe a in den Bezugszeichen des Ausführungsbeispiels in den Figuren 1 bis 4 durch den Buchstaben b in den Bezugszeichen des Ausführungsbeispiels der Figur 5 ersetzt.

Figur 5 zeigt eine Heizeinheit 14b einer Verpackungsformvorrichtung in einer alternativen Ausgestaltung. Die Heizeinheit 14b weist zumindest ein Heizelement 32b auf, welches vorliegend als ein Nachrüstteil ausgebildet ist. Der Unterschied zwischen dem Heizelement 32a im Ausführungsbeispiel a gemäß den Figuren 1 bis 4 und dem in Figur 5 gezeigten Heizelement 32b des Ausführungsbeispiels b besteht darin, dass in dieser beispielhaften Ausgestaltung das Heizelement 32b zu einer unmittelbaren Beheizung des Verpackungsmaterialschlauchs 24b vorgesehen ist. Das Heizelement 32b ist als eine konventionelle Vorheizung ausgebildet.

Das Heizelement 32b ist, wie bereits in Ausführungsbeispiel a erläutert, ebenfalls zwischen einer ersten Siegeleinheit und zumindest einer zweiten Siegeleinheit einer Reihe von Siegeleinheiten einer Längssiegeleinheit anordenbar. Eine Oberseite 108b des Heizelements 32b kann zumindest im Wesentlichen flächenbündig mit einer Oberseite eines Auflageelements der Verpackungsformvorrichtung angeordnet werden, sodass das Heizelement 32b in einem direkten Kontakt mit einem Verpackungsmaterialschlauch angeordnet ist. Gemäß Figur 5 ist ersichtlich, dass das das Heizelement 32b eine Führungsnut 106b zur Führung des Verpackungsmaterialschlauchs entlang einer Transportrichtung des Verpackungsmaterialschlauchs aufweist.

## Patentansprüche

1. Verpackungsformvorrichtung (12a), insbesondere für eine Schlauchbeutelmaschine, mit einer zur Längssiegelung eines Verpackungsmaterialschlauchs (24a) vorgesehenen Längssiegeleinheit (80a) aufweisend eine Reihe von Siegeleinheiten (82a, 84a, 86a) mit einer ersten Siegeleinheit (82a) der Reihe von Siegeleinheiten (82a, 84a, 86a) und zumindest einer nachfolgenden zweiten Siegeleinheit (84a) der Reihe von Siegeleinheiten (82a, 84a, 86a), und mit einer Heizeinheit (14a-b), welche zu einer zumindest abschnittsweisen Beheizung des Verpackungsmaterialschlauchs (24a) vorgesehen ist, wobei die Heizeinheit (14a-b) zumindest ein Heizelement (32a-b) aufweist, welches zumindest teilweise zwischen der ersten Siegeleinheit (82a) und der zweiten Siegeleinheit (84a) angeordnet ist, wobei eine zumindest abschnittsweise zwischen der ersten Siegeleinheit (82a) und der zweiten Siegeleinheit (84a) angeordnete Luftabsaugungseinheit (66a) zur Absaugung von Luft aus zumindest einem Bereich des Verpackungsmaterialschlauchs (24a) vorgesehen ist.

2. Verpackungsformvorrichtung (12a) nach Anspruch 1, **dadurch gekennzeichnet, dass** das Heizelement (32a) zumindest teilweise in die Luftabsaugungseinheit (66a) integriert ist.

3. Verpackungsformvorrichtung (12a) nach Anspruch 1 oder 2, **dadurch gekennzeichnet, dass** das Heizelement (32a) in einem Betriebszustand in einem Heizelementaufnahmebereich (68a) der Luftabsaugungseinheit (66a) angeordnet ist.

4. Verpackungsformvorrichtung (12a) nach Anspruch 3, **dadurch gekennzeichnet, dass** das Heizelement (32a) als ein Heizstab (34a) ausgebildet ist, welcher in dem Betriebszustand in dem länglich ausgebildeten Heizelementaufnahmebereich (68a) angeordnet ist.

5. Verpackungsformvorrichtung (12a) nach Anspruch 3 oder 4, **dadurch gekennzeichnet, dass** das Heizelement (32a) aus dem Heizelementaufnahmebereich (68a) reversibel entnehmbar ist.

6. Verpackungsformvorrichtung (12a) nach einem der Ansprüche 3 bis 5, **dadurch gekennzeichnet, dass** der Heizelementaufnahmebereich (68a) sich mit einem Luftabsaugbereich (88a) der Luftabsaugungseinheit (66a) zumindest teilweise überlappt.

7. Verpackungsformvorrichtung (12a) nach einem der vorhergehenden Ansprüche, **dadurch gekennzeichnet, dass** das Heizelement (32a-b) als ein Nachrüstteil ausgebildet ist.

8. Verpackungsformvorrichtung (12a) nach einem der vorhergehenden Ansprüche, **dadurch gekennzeichnet, dass** das Heizelement (32a) zu einer mittelbaren Beheizung des Verpackungsmaterialschlauchs (24a) vorgesehen ist.

9. Verpackungsformvorrichtung (12a) nach einem der Ansprüche 1 bis 7, **dadurch gekennzeichnet, dass** das Heizelement (32b) zu einer unmittelbaren Beheizung des Verpackungsmaterialschlauchs (24a) vorgesehen ist.

10. Verpackungsformvorrichtung (12a) nach einem der vorhergehenden Ansprüche, **dadurch gekennzeichnet, dass** die Heizeinheit (14a-b) zumindest ein weiteres Heizelement (99a) aufweist, welches zwischen der zweiten Siegeleinheit (84a) und zumindest einer nachfolgenden dritten Siegeleinheit (86a) der Reihe von Siegeleinheiten (82a, 84a, 86a) angeordnet ist.

11. Verpackungsformvorrichtung (12a) nach Anspruch 10, **dadurch gekennzeichnet, dass** das Heizelement (32a-b) und das weitere Heizelement (99a) identisch zueinander ausgebildet sind.

12. Verpackungsmaschine (10a), insbesondere Schlauchbeutelmaschine, mit einer Verpackungsformvorrichtung (12a) nach einem der vorhergehenden Ansprüche.

## Claims

1. Packaging forming device (12a), in particular for a tubular bag machine, comprising a longitudinal sealing unit (80a) which is provided for longitudinally sealing a packaging material tube (24a) and which has a series of sealing units (82a, 84a, 86a) with a first sealing unit (82a) of the series of sealing units (82a, 84a, 86a) and at least a subsequent second sealing unit (84a) of the series of sealing units (82a, 84a, 86a), and comprising a heating unit (14a-b) which is provided for at least partial heating of the packaging material tube (24a), wherein the heating unit (14a-b) has at least one heating element (32a-b) which is arranged at least partially between the first sealing unit (82a) and the second sealing unit (84a), wherein an air extraction unit (66a) arranged at least partially between the first sealing unit (82a) and the second sealing unit (84a) is provided for the extraction of air from at least one region of the packaging material tube (24a).

2. Packaging forming device (12a) according to claim 1,
**characterized in that** the heating element (32a) is at least partially integrated into the air extraction unit (66a).

3. Packaging forming device (12a) according to claim 1 or 2,
**characterized in that** the heating element (32a) is arranged in an operating state in a heating element receiving region (68a) of the air extraction unit (66a).

4. Packaging forming device (12a) according to claim 3,
**characterized in that** the heating element (32a) is designed as a heating rod (34a) which, in the operating state, is arranged in the elongated heating element receiving region (68a).

5. Packaging forming device (12a) according to claim 3 or 4,
**characterized in that** the heating element (32a) can be reversibly removed from the heating element receiving region (68a).

6. Packaging forming device (12a) according to any of claims 3 to 5,
**characterized in that** the heating element receiving region (68a) overlaps at least partially with an air extraction region (88a) of the air extraction unit (66a).

7. Packaging forming device (12a) according to any of the preceding claims, **characterized in that** the heating element (32a-b) is designed as a retrofit part.

8. Packaging forming device (12a) according to any of the preceding claims, **characterized in that** the heating element (32a) is provided for indirect heating of the packaging material tube (24a).

9. Packaging forming device (12a) according to any of claims 1 to 7, **characterized in that** the heating element (32b) is provided for direct heating of the packaging material tube (24a).

10. Packaging forming device (12a) according to any of the preceding claims, **characterized in that** the heating unit (14a-b) has at least one further heating element (99a) which is arranged between the second sealing unit (84a) and at least a subsequent third sealing unit (86a) of the series of sealing units (82a, 84a, 86a).

11. Packaging forming device (12a) according to claim 10,
**characterized in that** the heating element (32a-b) and the further heating element (99a) are identical to each other.

12. Packaging machine (10a), in particular a tubular bag machine, comprising a packaging forming device (12a) according to any of the preceding claims.

## Revendications

1. Dispositif de formage d'emballage (12a), en particulier pour une ensacheuse, comportant une unité de scellement longitudinale (80a) prévue pour le scellement longitudinal d'un tube de matériau d'emballage (24a) et présentant une rangée d'unités de scellement (82a, 84a, 86a) comportant une première unité de scellement (82a) de la rangée d'unités de scellement (82a, 84a, 86a) et au moins une deuxième unité de scellement (84a) suivante de la rangée d'unités de scellement (82a, 84a, 86a), et comportant une unité de chauffage (14a-b) prévue pour chauffer au moins dans certaines sections le tube de matériau d'emballage (24a), dans lequel l'unité de chauffage (14a-b) présente au moins un élément chauffant (32a-b) qui est disposé au moins partiellement entre la première unité de scellement (82a) et la deuxième unité de scellement (84a), dans lequel une unité d'aspiration d'air (66a), disposée au moins dans certaines sections entre la première unité de scellement (82a) et la deuxième unité de scellement (84a), est prévue pour l'aspiration de l'air d'au moins une zone du tube de matériau d'emballage (24a).

2. Dispositif de formage d'emballage (12a) selon la revendication 1, **caractérisé en ce que** l'élément chauffant (32a) est au moins partiellement intégré à l'unité d'aspiration d'air (66a).

3. Dispositif de formage d'emballage (12a) selon la revendication 1 ou 2, **caractérisé en ce que,** dans un état de fonctionnement, l'élément chauffant (32a) est disposé dans une zone de réception pour élément chauffant (68a) de l'unité d'aspiration d'air (66a).

4. Dispositif de formage d'emballage (12a) selon la revendication 3, **caractérisé en ce que** l'élément chauffant (32a) est réalisé sous forme de thermoplongeur (34a) qui, à l'état de fonctionnement, est disposé dans la zone de réception pour élément chauffant (68a) réalisé allongé.

5. Dispositif de formage d'emballage (12a) selon la revendication 3 ou 4, **caractérisé en ce que** l'élément chauffant (32a) peut être retiré de manière réversible de la zone de réception pour élément chauffant (68a).

6. Dispositif de formage d'emballage (12a) selon l'une des revendications 3 à 5, **caractérisé en ce que** la zone de réception pour élément chauffant (68a) chevauche au moins partiellement une zone d'aspiration d'air (88a) de l'unité d'aspiration d'air (66a).

7. Dispositif de formage d'emballage (12a) selon l'une des revendications précédentes, **caractérisé en ce que** l'élément chauffant (32a-b) est réalisé sous forme de pièce de complément.

8. Dispositif de formage d'emballage (12a) selon l'une des revendications précédentes, **caractérisé en ce que** l'élément chauffant (32a) est prévu pour chauffer indirectement le tube de matériau d'emballage (24a).

9. Dispositif de formage d'emballage (12a) selon l'une des revendications 1 à 7, **caractérisé en ce que** l'élément chauffant (32b) est prévu pour chauffer directement le tube de matériau d'emballage (24a).

10. Dispositif de formage d'emballage (12a) selon l'une des revendications précédentes, **caractérisé en ce que** l'unité de chauffage (14a-b) présente au moins un élément chauffant supplémentaire (99a) qui est disposé entre la deuxième unité de scellement (84a) et au moins une troisième unité de scellement (86a) suivante de la rangée d'unités de scellement (82a, 84a, 86a).

11. Dispositif de formage d'emballage (12a) selon la revendication 10, **caractérisé en ce que** l'élément chauffant (32a-b) et l'élément chauffant supplémentaire (99a) sont réalisés de manière identique l'un à l'autre.

12. Machine d'emballage (10a), en particulier ensacheuse, comportant un dispositif de formage d'emballage (12a) selon l'une des revendications précédentes.
